(19) Europäisches Patentamt
European Patent Office
Office européen des brevets

(11) **EP 3 680 961 A1**

(12) **EUROPEAN PATENT APPLICATION**

(43) Date of publication:
**15.07.2020 Bulletin 2020/29**

(51) Int Cl.:
*H01M 4/13* (2010.01)     *H01M 4/139* (2010.01)
*H01M 4/62* (2006.01)     *H01M 10/052* (2010.01)
*H01M 4/134* (2010.01)     *H01M 4/131* (2010.01)
*H01M 4/1391* (2010.01)     *H01M 4/1393* (2010.01)
*H01M 4/36* (2006.01)     *H01M 4/02* (2006.01)

(21) Application number: **19151026.2**

(22) Date of filing: **09.01.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **The Provost, Fellows, Scholars and
other
Members of Board of Trinity College Dublin
Dublin 2 (IE)**

(72) Inventors:
• **COLEMAN, Jonathan**
  **Sandyford Village, Dublin 18 D18 Y1F1 (IE)**
• **NICOLOSI, Valeria**
  **Dublin 2 (IE)**
• **PARK, Sang Hoon**
  **Donabate, Co. Dublin (IE)**
• **KING, Paul**
  **Blanchardstown, Co. Dublin (IE)**

(74) Representative: **Purdylucey Intellectual Property
6-7 Harcourt Terrace
D02 FH73 Dublin 2 (IE)**

(54) **HIGHLY EFFICIENT ELECTRODES ENABLED BY SEGREGATED NETWORKS**

(57)    A composite for use as an electrode, the composition comprising a uniformly distributed spontaneously formed segregated network of carbon nanotubes, metallic nanowires or a combination thereof, and a particulate active material, and in which the composite is free of carbon black and has no additional polymeric binder.

Figure 1

**Description**

**Field of the Invention**

The invention relates to electrodes and, high areal capacity electrodes, and the methods of making the same.

**Background to the Invention**

To meet trends such as the rise of electric vehicles, significant advances in the energy storage capability of batteries are urgently required. In the dominant field of lithium-ion batteries (LIBs), most research has focused on the development of high capacity electrode materials such as silicon for the anode or lithium sulfide for the cathode. An alternative strategy would be to optimize electrode architecture to maximize the electrode areal capacity (C/A). Maximising this parameter necessitates the ability to fabricate very thick electrodes from high-performance active materials while retaining their high specific capacities at large mass loadings. For both anodes and cathodes, $C/A = C_{SP} \times M / A,$ where $C_{SP}$ is the specific capacity (mAh/g) of the electrodes and M/A is its mass loading (mg/cm$^2$). Thus, both $C_{SP}$ and M/A must be simultaneously maximized, leading to a number of challenges. First, high-performance electrode materials tend to be granular (*i.e.* particulate-based) and so display mechanical instabilities above the so-called critical cracking thickness (CCT), making it impossible to prepare very thick electrodes even with polymeric binders. Above a critical thickness, solution-processed particulate films display mechanical instabilities (for example, a mud-cracking effect), which lead to failure, even in the presence of polymeric binders. Secondly, poor conductivity of advanced electrode materials means conductive additives must be incorporated to allow charge distribution within the electrode. However, standard conductive additives such as carbon black (CB) yield low, inhomogeneous and unstable electrode conductivity, limiting electrochemical utilization, rate-behaviour and stability.

Various types of electrode composites exist *e.g.* Si nanowire composites, Si graphene composites (Anode); $LiFePO_4$, NCM111, $LiCoO_2$ *etc.* (Cathode) (as described in 'Li-ion battery materials: present and future', Materials Today. Volume 18, Number 5, pp. 252-264 (2015)). Various methods to produce electrodes that provide high areal capacity also exist, for example, vacuum filtration, CVD growth, slurry coating onto foam, magnetic templating *etc.* While a number of methods have been suggested to maximize C/A, none of them are industrially scalable. Many of the preparation methods require complex/non-scalable manufacturing techniques, however. Most of the scalable preparation methods achieve areal capacities of between 9 mAh cm$^{-2}$ and 12.5 mAh cm$^{-2}$. Commercial LIBs have electrodes of ~50 $\mu$m effective thickness.

Hasegawa and Noda (Journal of Power Sources, vol. 321, pp. 155-162 (2016)) describe LIBs without binder or metal foils, based on a three-dimensional carbon nanotube (CNT) current collector using CNTs of 370$\mu$m in length, and with a particle cathode (LiCoO2, 0.5 $\mu$m and an anode (graphite, 10 $\mu$m). The full cells typically were 1 wt% CNT electrode-based cells. A discharge capacity of 353 mAh/g$_{graphite}$ based on the anode weight at 0.1C and 306 mAh/g$_{graphite}$ at 1C were achieved with a capacity retention of 65% even at the 500th cycle. Hasegawa and Noda conclude that a CNT content of ~1 wt% is preferable because excess CNTs (*i.e.*, 10 wt%) cause additional side reactions because of their large surface area. The thickness of the electrodes are 20-22 $\mu$m. Wu *et al.* (Nano Lett., vol. 14, pp. 4700-4706 (2014)) teaches embedding $Li(Ni_{0.5}Co_{0.2}Mn_{0.3})-O_2$ in the single wall CNT network, creating a composite in which all components are electrochemically active. Long-term charge/discharge stability was obtained between 3.0 and 4.8 V, and both $Li(Ni_{0.5}Co_{0.2}Mn_{0.3})-O_2$ and CNT contribute to the overall reversible capacity by 250 and 50 mAh/g, respectively. The electrode thickness was 44 $\mu$m.

One potential solution is to increase the areal capacity by increasing the thickness of the electrodes. The electrodes described above in Hasegawa and Noda (2016) and Wu (2014) are not suitable for thick electrodes over 250$\mu$m and at the same time provide a higher areal capacity. However, as discussed above, when above a critical thickness, solution processed particulate films have mechanical instabilities (*i.e.* they can crack) which leads to failure.

It is an object of the present invention to overcome at least one of the above-mentioned problems.

**Summary of the Invention**

In brief, the invention lies in the use of a spontaneously formed segregated network of carbon nanotubes (CNT) (or the use of metallic nanowires in combination with or instead of the CNTs) to increase the maximum thickness of electrodes. This, in turn, allows for the increase of areal capacitance and therefore, improves energy storage device capacity. The inventors have developed a method to produce extremely thick and high areal capacity composite electrodes by the spontaneous formation of a segregated network composite of CNTs with either silicon or metal oxide particles. The spontaneously formed segregated CNT composite network increases the mechanical properties of the electrode dramatically, supressing the mechanical instabilities by toughening the composite, and allowing the fabrication of electrodes with thicknesses of up to 1000$\mu$m. Additionally, this spontaneously formed segregated composite CNT network provides very high conductivity, allowing fast charge distribution within the electrodes and enabling very high, record areal capacities of up to 45 and 30 mAh/cm$^2$ for anodes and cathode electrodes, respectively. Combining optimized composite anodes and cathodes yields full-cells with state-of-the-art areal capacities (29 mAh/cm2) and specific energies (540 Wh/kg).

According to the present invention there is provided, as set out in the appended claims, in one aspect, a composite for use as an electrode, the composition comprising a homogenously distributed and spontaneously formed segregated network of carbon nanotubes, metallic nanowires or a combination thereof, and a particulate active material, in which no additional polymeric binder or conductive-additive are required.

In one aspect, the composite comprises from 0.1 wt% to 10 wt% of the homogenously distributed spontaneously formed segregated network of carbon nanotubes, metallic nanowires or a combination thereof.

In one aspect, the carbon nanotubes, metallic nanowires or a combination thereof, are dispersed in either an organic solvent alone or an organic solvent water stabilised with 0.2 wt% to 2 wt% surfactant. Preferably, the surfactant is selected from sodium dodecyl sulfate (SDS), Sodium Dodecyl Benzene Sulphonate (SDBS), octyl-phenol-ethoxylate. Preferably, the solvent is selected from the group comprising n-methyl pyrrolidone (NMP), cyclohexylpyrrolidone, di-methyl formamide, Cyclopentanone (CPO), Cyclohexanone, N-formyl piperidine (NFP), Vinyl pyrrolidone (NVP), 1,3-Dimethyl-2-imidazolidinone (DMEU), Bromobenzene, Benzonitrile, N-methyl-pyrrolidone (NMP), Benzyl Benzoate, N,N'-Dimethylpropylene urea, (DMPU), gamma-Butrylactone (GBL), Dimethylformamide (DMF), N-ethyl-pyrrolidone (NEP), Dimethylacetamide (DMA), Cyclohexylpyrrolidone (CHP), DMSO, Dibenzyl ether, Chloroform, Isopropylalcohol (IPA), Cholobenzene, 1-Octyl-2-pyrrolidone (N8P), 1-3 dioxolane, Ethyl acetate, Quinoline, Benzaldehyde, Ethanolamine, Diethyl phthalate, N-Dodecyl-2-pyrrolidone (N12P), Pyridine, Dimethyl phthalate, Formamide, Vinyl acetate, Acetone *etc.*

In one aspect, the metallic nanowires consist of silver, gold, platinum, palladium, nickel, or any metal nanowires coated with a thin layer of noble metal (for example, gold or platinum).

In one aspect, the particulate active material is selected from micron-sized silicon powder, lithium, sulphur, graphene, graphite, and lithium nickel manganese cobalt oxide (NMC, $LiNi_xMn_yCo_zO_2$ where x+y+z = 1), lithium cobalt oxide (LCO), lithium nickel cobalt aluminium oxide (NCA), lithium iron phosphate (LFP), lithium titanium oxide (LTO) alloying materials (Si, Ge, Sn, P *etc.*), chalcogenides (S, Se, Te), metal halides (F, Cl, Br, I), and any other suitable battery material. Preferably, the particulate active material is Lithium Nickel Manganese Cobalt Oxide (NMC). Ideally, the NMC is $LiNi_{0.8}Mn_{0.1}Co_{0.1}O_2$ or $LiNi_{0.5}Mn_{0.3}Co_{0.2}O_2$.

In one aspect, the composite comprises from 90 wt% to 99.9 wt% of the particulate active material.

In one aspect, the ratio of the length of the carbon nanotubes, metallic nanowires or combination thereof, and the active material particles is at most 1:1.

In one aspect, the composite described above is for use as an electrode in an energy storage device such as a battery, a supercapacitor, an electrocatalyst, or a fuel cell.

In one aspect, there is provided a positive electrode comprising the composite described above. Preferably, the positive electrode has a composition wherein the carbon nanotube, metallic nanowires or combination thereof have a mass fraction (Mf) in the electrode of 0.01 - 25 wt%. Preferably, the carbon nanotube, metallic nanowires or combination thereof have a mass fraction (Mf) in the electrode of 0.05 - 20 wt%.

In one aspect, the positive electrode has a composition wherein the carbon nanotube, metallic nanowires or combination thereof have a mass fraction (Mf) in the electrode of 0.25 - 7.5 wt%.

In one aspect, the positive electrode has a thickness of between 200μm to 1000μm, or ideally from between 400μm to 1000μm. That is, a thickness selected from 200μm, 250μm, 275μm, 300μm, 325μm, 350μm, 375μm, 400μm, 425μm, 450μm, 475μm, 500μm, 525μm, 550μm, 575μm, 600μm, 675μm, 700μm, 725μm, 750μm, 775μm, 800μm, 825μm, 850μm, 875μm, 900μm, 925μm, 950μm, 975μm, and 1000μm.

In one aspect, there is provided a negative electrode comprising the composite described above.

In one aspect, the negative electrode has a composition wherein the carbon nanotube, metallic nanowires or combination thereof have a mass fraction (Mf) in the electrode of 0.001 - 15 wt%. Preferably, the carbon nanotube, metallic nanowires or combination thereof have a mass fraction (Mf) in the electrode of 0.01 - 10 wt%.

In one aspect, the carbon nanotube, metallic nanowires or combination thereof have a mass fraction (Mf) in the electrode of 0.25 - 7.5 wt%.

In one aspect, the negative electrode has a thickness from between 200μm to 1000μm; preferably from between 400μm to 1000μm. That is, a thickness selected from 200μm, 250μm, 275μm, 300μm, 325μm, 350μm, 375μm, 400μm, 425μm, 450μm, 475μm, 500μm, 525μm, 550μm, 575μm, 600μm, 675μm, 700μm, 725μm, 750μm, 775μm, 800μm, 825μm, 850μm, 875μm, 900μm, 925μm, 950μm, 975μm, and 1000μm.

In one aspect, there is provided a non-rechargeable battery comprising an anode material, a cathode material, and an electrolyte, wherein the anode material and the cathode material comprise the composite described above.

In one aspect, there is provided a rechargeable battery comprising an anode material, a cathode material, and an electrolyte, wherein the anode material and the cathode material comprise the composite described above.

In one aspect, there is provided a method for producing a positive or negative electrode, the method comprising mixing an aqueous dispersion of carbon nanotubes or metallic nanowires, or a combination thereof, with a particulate active material powder to form a mixture, and depositing the mixture onto a substrate to form a homogenously distributed spontaneously formed segregated network that yields a robust, flexible electrode.

In one aspect, the mixture of the carbon nanotubes or metallic nanowires, or combination thereof, with the particulate active material has a viscosity of approximately 0.1 Pa.s at a shear rate of 100 s$^{-1}$.

In one aspect, the slurry is dried to form the homogenously distributed spontaneously formed segregated network of carbon nanotubes, metallic nanowires or a combination thereof.

In one aspect, the substrate is selected from glass, semi-conductors, metal, ceramic, Aluminium foil, Copper foil or other stable conductive foils or layers.

In one aspect, the mixture is deposited onto the substrate by any one or more of the following techniques: slurry casting, blade coating, filtration, screen printing, spraying (electrospray, ultrasonic-spray, conventional aerosol spray), printing (ink jet printing or 3D printing), roll-to-roll coating or processing, or drop casting.

There is also provided a use of the composite described above in the manufacture of electrodes.

There is also provided a high areal capacity battery comprising electrodes as described above.

*Definitions*

In the specification, the term "2-dimensional membrane" should be understood to mean a two-dimensional network of CNT which is very thin but of extremely large area.

In the specification, the term "areal capacity electrode" and "areal capacity battery" should be understood to mean the area-normalized specific capacity of an electrode or a battery, respectively.

In the specification, the term "composite" should be understood to mean a mixture of two or more components that, when combined, provide a mechanically stable and conductive network that have very high mechanical toughness. This toughness allows very thick electrodes to be made because it prevents crack formation (a process analogous to mud-cracking seen in drought conditions on dry river beds, for example, and which occurs during the manufacturing/drying of any particulate films thicker than some critical value) during charging/discharging, which improves stability. Thick electrodes store more Lithium ions and yield higher energy density.

In the specification, the term "electrode active material" should be understood to mean an oxide material with poor conductivity to which CNTs are added. Such electrode active materials that can be used for positive and/or negative electrodes include silicone, graphene, ceramics ($SiO_2$, $Al_2O_3$, $Li_4Ti_5O_{12}$, $TiO_2$, $CeO_2$, $ZrO_2$, $BaTiO_3$, $Y_2O_3$, MgO, CuO, ZnO, $AlPO_4$, AlF, Si3N4, AlN, TiN, WC, SiC, TiC, MoSi2, $Fe_2O_3$, $GeO_2$, $Li_2O$, MnO, NiO, zeolite), $LiNi_xMn_yCo_zO_2$ (such as $LiNi_{0.7}Co_{0.3}O_2$), $LiCoO_2$, $MnO_2$, $LiMn_2O_4$, $LiFePO_4$, and $LiMnPO_4$. When the active material is $LiNi_xMn_yCo_zO_2$, x+y+z = 1. Any particulate material with a particle size greater than the nanotube length is suitable for use in the electrodes and LIBs of the claimed invention.

In the specification, the term "carbon nanotubes" should be understood to mean multiple rolled layers of graphene nanosheets.

In the specification, the term "segregated network" should be understood to mean a network of CNT (or metallic nanowires or a combination thereof) which spans the entire sample but is locally in the form of a porous, two-dimensional network which can wrap the active material particles and acts as a scaffold that holds the active particles in place. The segregated network spontaneously forms when the ratio of the length of the CNT (or metallic nanowires or combination thereof; for example, ~1 $\mu$m) to the active material in the composite (such as micro-silicon, >1 $\mu$m) is in the order of, at most, 1:1. While CNTs are used herein to illustrate an example of the claimed invention, CNTs can also be replaced by, or combined with, metallic nanowires to form the segregated network that spontaneously creates a two-dimensional membrane around the active material particles. Essentially, the segregated network composite consists of a disordered array of particles (the active material) wrapped in a continuous, locally 2D, network of CNT, metallic nanowires or combination thereof, which when collected together, form the architecture of an electrode.

In the specification, the term "metal nanowires" should be understood to mean a rod-like structure with diameter of typically 1-100 nm and length >10 times the diameter. To ensure stability in the electrolyte, the surface of the nanowires should consist of silver, gold, platinum, palladium or nickel.

In the specification, the term "battery" should be understood to mean an electric battery, consisting of cathode, anode, separator and electrolyte, which provided to power electrical devices such as flashlights, smartphones, and electric cars.

In the specification, the term "supercapacitor" should be understood to mean a high-capacity capacitor with capacitance values much higher than other capacitors, which are used in applications requiring many rapid charge/discharge cycles.

In the specification, the term "catalyst" should be understood to mean some special materials/composites, which are used to increase the rate of a chemical reaction but not be consumed in the catalysed reaction and can continue to act repeatedly.

In the specification, the term "fuel cell" should be understood to mean an electrochemical cell that converts the chemical energy from a fuel into electricity through an electrochemical reaction of hydrogen fuel with oxygen or another oxidizing agent.

In the specification, the term "uniformly disturbed mixture" should be understood to mean that the CNTs, metallic nanowires or combination thereof and the active particulate material form a homogenous mixture in an aqueous solution. By that, it is meant the CNTs, metallic nanowires or combination thereof, are dispersed uniformly within the space between the active particulate materials. This homogenous mixture is present when the mixture is in both the aqueous (slurry) and dried (composition) states.

**Brief Description of the Drawings**

The invention will be more clearly understood from the following description of an embodiment thereof, given by way of example only, with reference to the accompanying drawings, in which:-

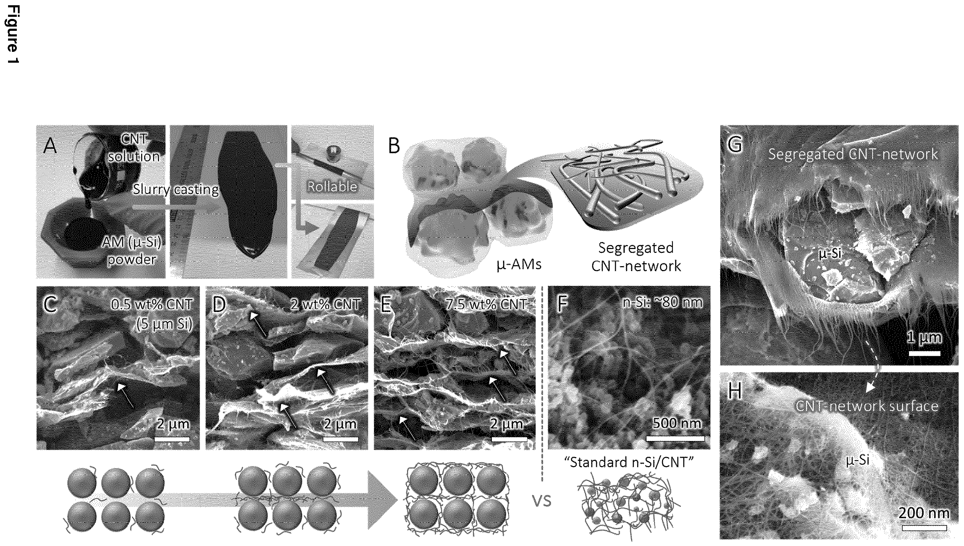

**Figure 1** illustrates fabrication of hierarchical composite electrodes. (A) Composite electrode fabrication by mixing aqueous CNT dispersions with particulate active material powders and slurry-casting onto substrates to yield robust, flexible electrodes. (B) Schematic of resultant hierarchical Si/CNT composite electrode, showing formation of 2D CNT-membranes between micron-sized Si ($\mu$-Si) particles. (C-F) Cross-sectional SEM images of (C-E) $\mu$-Si (5 $\mu$m)/CNT composite anodes with mass fraction ($M_f$) varying from 0.5-7.5wt% with (F) a standard composite of n-Si (80 nm)/CNT ($M_f$=7.5wt%) for comparison. For the segregated network composites, the development of nanotube membranes (arrows) can be clearly seen as $M_f$ increases (D to F). The schemes below illustrate the evolution of the CNT-membranes as the $M_f$ is increased and highlight the difference between normal and segregated network composites. (G-H) High magnification cross-sectional SEM images of $\mu$-Si/7.5wt% CNT composite anode showing (G) a $\mu$-Si particle wrapped by 2D CNT-membranes which consist of entangled, van der Waals bonded networks of CNT bundles/ropes (H). Clearly, the membranes are quasi-continuous and so can localize the silicon particles yet contain small ($\sim$10 nm) pores which allow free movement of electrolyte.

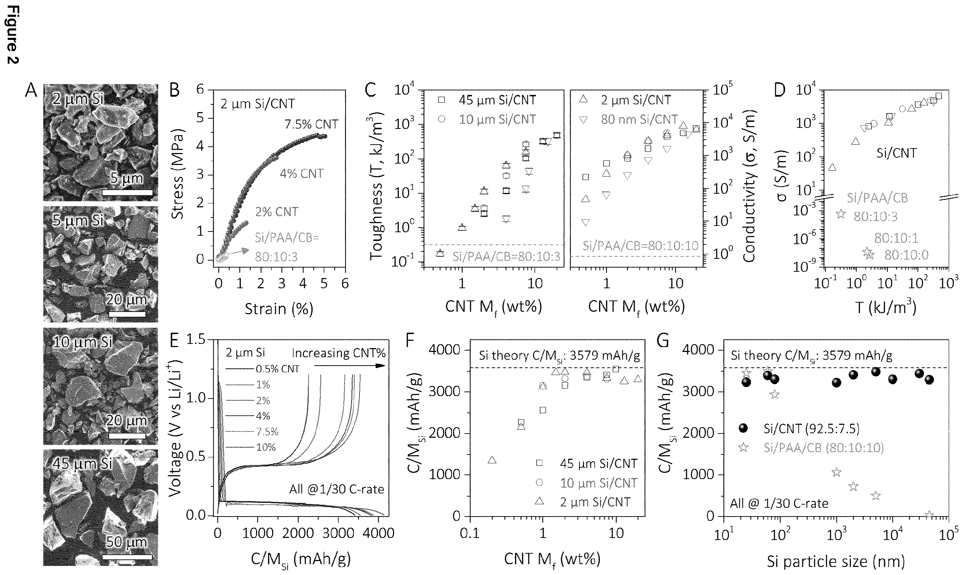

**Figure 2** illustrates basic material/electrochemical characterizations. (A) SEM images of Si particles with various mean particle sizes (2-45 $\mu$m). (B) Representative stress-strain curves for 2 $\mu$m Si/CNT composite anodes with various CNT $M_f$. For comparison, the curve for a 2 $\mu$m Si/PAA/CB composite (no CNT, composition given in panel) is also shown. (C) Tensile toughness and electrical conductivity of various Si/CNT composite anodes plotted versus CNT $M_f$. In each case, the orange line indicates the properties of a traditional anode composed of 2$\mu$m-Si/PAA/CB (composition given in panel). (D) Plot of conductivity versus toughness for Si/CNT composites compared to traditional of 2$\mu$m-Si/PAA/CB composites (compositions given in panel). (E) First galvanostatic charge-discharge (GCD) curves of 2 $\mu$m Si/CNT composite anodes with various CNT $M_f$, ranging from 0.5-10wt%. Mass loading (M/A) for all electrodes are $\sim$3 mg/cm2. (F) First delithiation capacity (normalized to Si mass, C/MSi) of Si/CNT composites as a function of CNT $M_f$. With addition of >2wt% CNT, all composites anodes approach to the theoretical Si capacity (3579 mAh/g, dashed line). (G) First delithiation capacity for CNT composite anodes (with optimized CNT $M_f$ of 7.5wt%, M/A$\approx$3 mg/cm$^2$) and traditional anodes (Si/PAA/CB = 80:10:10, M/A=1-2 mg/cm2) plotted versus Si particle size. Dash line indicates theoretical Si capacity.

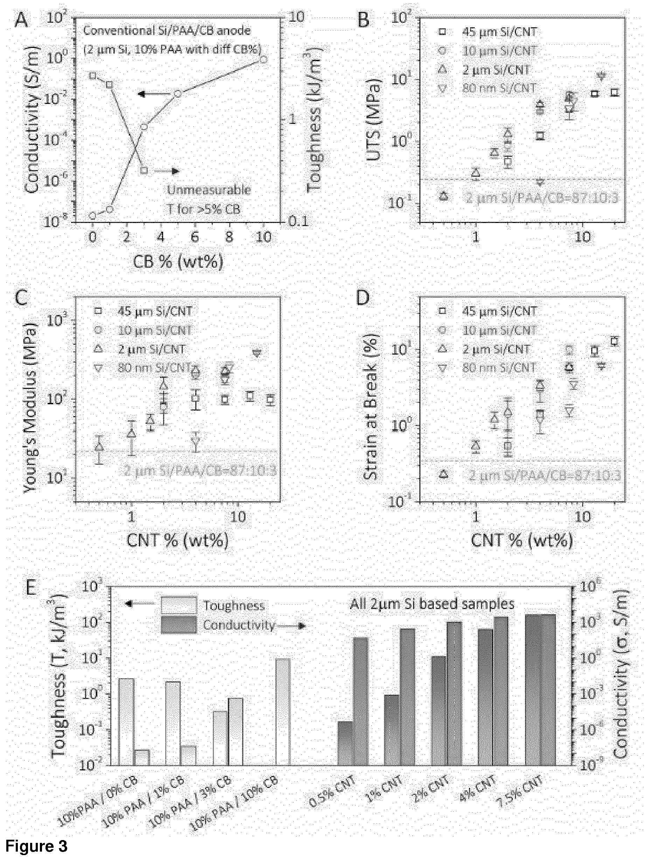

**Figure 3** illustrates the full mechanical data for Si/CNT composites and controlled sample prepared using conventional PAA binder (2 $\mu$m Si/10% PAA, orange dash lines). (A) Electrical conductivity (black open circles, left y-axis) and tensile toughness (*i.e.* tensile energy density required to break film, blue square, right y-axis) of $\mu$-Si anodes (2 $\mu$m Si) prepared by a traditional polymeric binder (PAA) and carbon black (CB) combination. Here CB $M_f$ (0 - 10 wt%) was varied while PAA $M_f$ was fixed at 10 wt%. Electrical conductivity is improved as the CB $M_f$ increases (at a fixed 10 wt% PAA) while toughness is decreased dramatically, showing the trade-off relationship between conductivity and mechanical properties. The mechanical properties of the samples with CB $M_f$ > 5 wt% was too low to measure. (B) Universal tensile stress, (C) Young's Modulus, and (D) strain at break of the samples versus CNT wt%. Similar to the electrical conductivity, with the addition of CNT, all the mechanical properties have been dramatically improved. It is clear that all of the mechanical properties of the CNT-based composites are much higher than those for the conventional electrode (orange dash lines) at the similar binder composition. For example, 2 $\mu$m Si/CNT composite with 7.5 wt% CNT displays $\times$ 10 higher values for all the mechanical properties than 2 $\mu$m Si/PAA (10 wt% PAA) electrode. Furthermore, much smaller amounts of CNT (1 - 2 wt%) are required to reach the corresponding level of the mechanical properties for the 2 $\mu$m Si/PAA (10 wt% PAA) electrode. (E) Bar chart comparing toughness/electrical conductivities for the traditional anodes and $\mu$-Si/CNT composite anodes with various compositions.

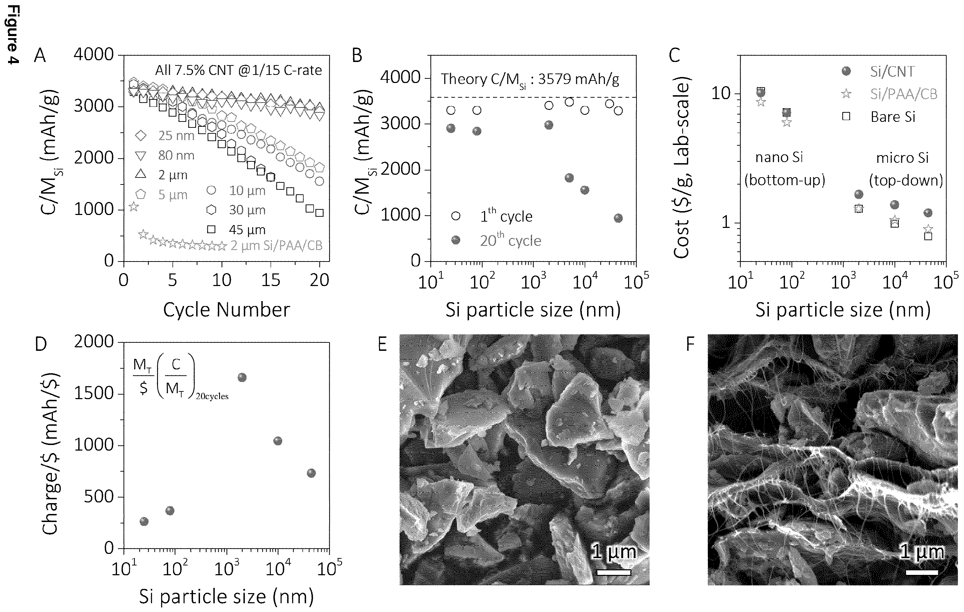

**Figure 4** illustrates a stability and performance-cost evaluation for Si/CNT anodes with various Si particle sizes. (A) Cycling performance of Si/CNT composite anodes with various Si sizes and a CNT Mf of 7.5wt%. A traditional 2$\mu$m-Si/PAA/CB (80:10:10) anode is shown for comparison. (B) Si specific capacity of the composite anodes plotted versus Si particle size. (C) Material and resultant electrode costs with different Si particle sizes. For simplicity but fair comparison, all the material costs were surveyed based on the similar lab-scale value (all ~100g base). The electrode costs (Si/CNT composites or Si/PAA/CB anodes) are calculated from their electrode composition (Si/CNT = 92.5:7.5 or Si/PAA/CB = 80:10:10). (D) Cost-effectiveness of composite electrodes as a function of Si particle size. (E-F) SEM images of (E) 2 $\mu$m Si particles and (F) a cross section of a composite anode fabricated from 2 $\mu$m Si/7.5wt% CNT.

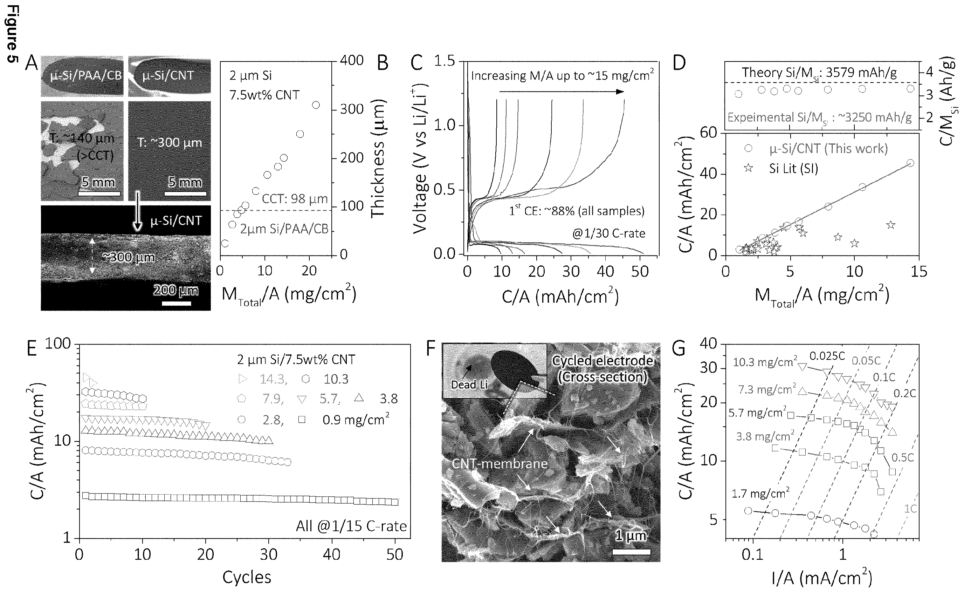

**Figure 5** illustrates the electrochemical characterization of $\mu$-Si/CNT anodes with high mass loading. In all composite anodes, 2 $\mu$m Si was used with optimized CNT Mf of 7.5wt%. (A) Photos comparing our composite anode and traditional 2$\mu$m-Si/PAA/CB (80:10:10) anode. The traditional anodes show crack formation at thicknesses above their CCT (98 $\mu$m), while composite anodes display very high CCT (>>300 $\mu$m) allowing the formation of very thick electrodes. The cross-sectional SEM image shows the highest loading composite anode (Thickness=310 $\mu$m and M/A=21.5 mg/cm$^2$). (B) Electrode thickness as a function of M/A for $\mu$-Si/CNT composite anodes. The dashed line shows the upper thickness limit for 2$\mu$m-Si/PAA/CB anodes. (C) First GCD curves of $\mu$-Si/CNT composite anodes at a ~1/30 C-rate for a range of M/A between 2.3-14.3 mg/cm$^2$. The composite anodes with M/A>15 mg/cm$^2$ couldn't be tested in half-cells, due to the insufficient Li supply from the Li-metal counter electrode. (D) Bottom: C/A of the $\mu$-Si/CNT composite anodes as a function of M/A. High-performance literature data are included for comparison with the details indicated in Table 2. Top: Si specific capacity (normalized to Si mass, C/MSi) of composite anodes with various M/A. The dash lines indicate theoretical Si capacity of 3579 mAh/g. (E) Half-cell cycling performance for various M/A composite anodes at ~1/15 C-rate. (F) Post-mortem SEM images of the cycled composite anode. Inset photo shows severe degradation of Li-metal after cycling, while the composite anode maintained its structural integrity. (G) C/A of $\mu$-Si/CNT composite anodes with various M/A depending on areal current density (I/A).

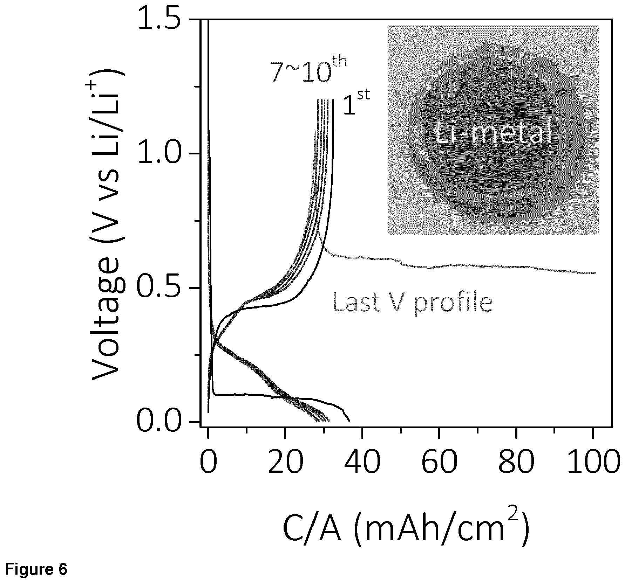

**Figure 6** illustrates voltage profiles of high C/A $\mu$-Si/CNT composite anode in a half-cell, and the photo of Li-metal counter electrode after cycling. Above 10 cycles, the half-cell made of high C/A electrode (>30 mAh/cm$^2$) suddenly stopped working normally; the potential of the cell was not rising anymore during the delithiation process. After disassembling these cells, a thick/brittle black film was observed on the surface of the Li-metal counter electrode. This Li-metal degradation (corrosion) possibly limited the cyclability in the high C/A electrodes.

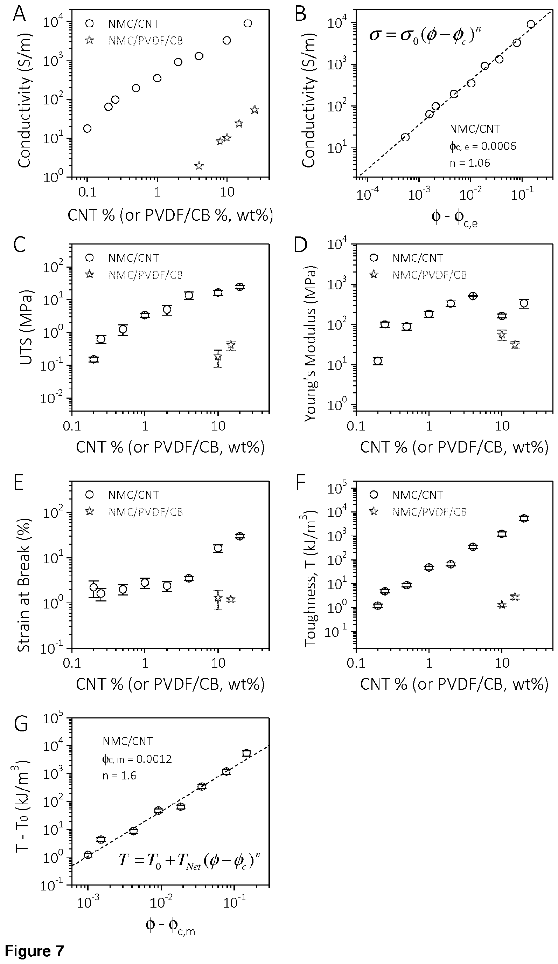

**Figure 7** illustrates the electrical and mechanical properties of NMC/CNT composites (NMC = Lithium Nickel Manganese Cobalt oxide, for example in ratio LiNi$_{0.8}$Mn$_{0.1}$Co$_{0.1}$O2) and controlled samples prepared by conventional PVDF binder with CB combination. (A) Electrical conductivity ($\sigma$) of NMC/CNT composites and controlled samples as a function of CNT wt% (or PVDF/CB wt%). Upon the addition of CNT, electrode conductivity has been increased significantly. It should be emphasized that the claimed NMC/CNT composites show much higher conductivity than the conventional electrodes using PVDF/CB at the equivalent composition (NMC/10wt% CNT= 3200 S/m and NMC/5wt% PVDF/5wt% CB = 10 S/m, $\times$300 higher). Also, a very small amount of CNT can replace the large portion of PVDF/CB to reach a similar level of conductivity (NMC/0.2wt% CNT = 64 S/m and NMC/12.5wt% PVDF/12.5wt% CB = 53 S/m). (B) Percolation plot showing the electrode conductivity versus $\phi$-$\phi_{c,e}$, where $\phi$ is the CNT volume fraction,

$$\phi_{CNT} = \rho_{composite} \cdot M_{f,CNT} / \rho_{CNT} \qquad (1)$$

where $\phi_{c,e}$ is the electrical percolation threshold (critical volume fraction at which the first conducting path is formed in the matrix). The line is a fit to the percolation scaling law,

$$\sigma = \sigma_0 (\phi - \phi_{c,e})^{n_e} \qquad (2)$$

where $\sigma_0$, and $n_e$ are the conductivity of the CNT film alone, and the electrical percolation exponent, respectively. The percolation equation fits very well, giving the values of $\phi_{c,e}$ = 0.06 vol% (i.e., 0.054 wt%), and $n_e$ = 1.06. The percolation threshold is much lower than the value observed from CB ($\phi_{c,e}$ = 3 - 25 wt%), supporting well the reason for the much higher electrical conductivity than the conventional electrode even using a very small amount of CNTs. (C) Universal tensile stress, (D) Young's Modulus, (E) strain at break, and (F) tensile toughness (energy absorbed up to break) of the NMC samples versus CNT wt% (or PVDF/CB wt%). (G) Mechanical percolation plot showing toughness increase versus $\phi$-$\phi_{c,m}$, where $\phi_{c,m}$ is the mechanical percolation threshold and $T_0$ is the toughness of CNT-free film. The lines represent percolation-like scaling behavior via,

$$T = T_0 + T_{net}(\phi - \phi_{c,m})^{n_t}$$

(3)

where $T_{net}$ is the toughness of CNT film, and $n_t$ is the mechanical percolation exponent, respectively. Fitting the toughness data to percolation theory yields: $\phi_{c,m}$ = 0.12 vol% (i.e. 0.1 wt%), $n_t$ = 1.6. Similar to $\mu$-Si/CNT composites, NMC/CNT composites show much higher mechanical properties than those for the conventional electrodes at the equivalent compositions. For example, all the mechanical properties for NMC/10wt% CNT were >100 times greater than the traditional electrodes at the equivalent electrode compositions (NMC/5wt% PVDF/5wt% CB), or even ~5 times higher at the very low CNT contents (0.2 - 0.5 wt%) used in electrodes.

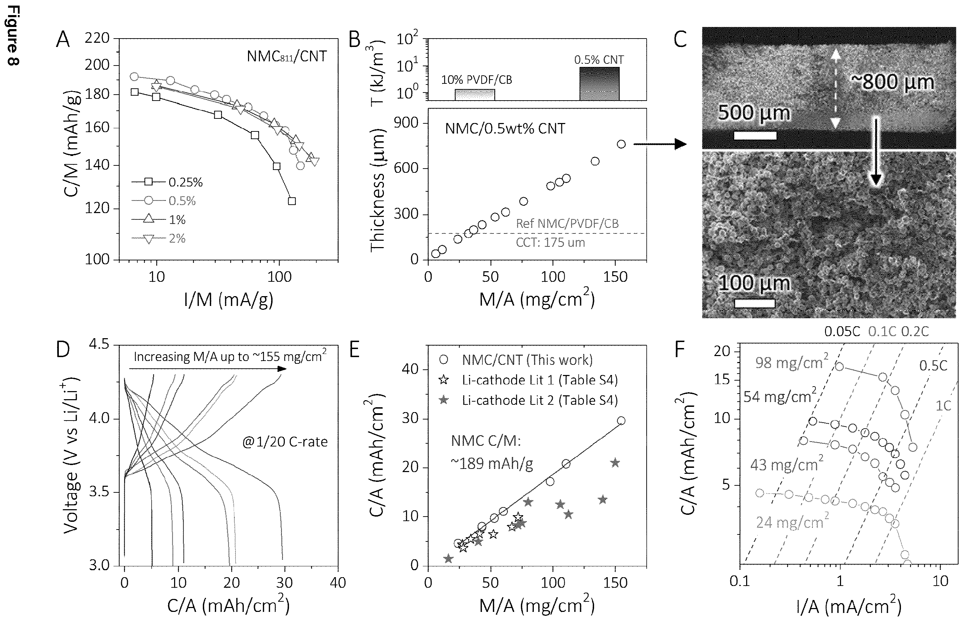

**Figure 8** illustrates the electrochemical performance of NMC/CNT cathodes in half-cell measurement. (A) Discharge rate-capability of NMC/CNT cathodes with various CNT $M_f$ (0.25 - 2 wt%, all cathode M/A = ~20 mg/cm²). For NMC, much lower CNT $M_f$ (0.25 - 2 wt%) have been employed than in the anode system (~7.5 wt%) of the claimed invention, under the consideration of CNT's volume fraction (CNT vol%) in the electrodes. Since the NMC-based cathodes typically have higher electrode density (~2 g/cc) than Si-based anodes (~0.7 g/cc), which could lead to the higher CNT vol% at the equivalent CNT wt%. Interestingly, the electrochemical performance of the claimed NMC/CNT cathodes does not obviously change above 0.5 wt% CNT as shown in (A). At the lowest current density, all of 0.5 - 2 wt% CNT electrodes display high C/M of ~190 mAh/g, close the theoretical capacity of NMC (NMC811=~200 mAh/g up to 4.3 V vs Li/Li⁺), then showing similar rate-performance at higher current densities. This might be due to the extremely low electrical percolation threshold of CNT (*i.e.,* 0.054 wt%, Figure 7), thus providing sufficient conductivity above 0.5 wt%. (B) Top: Bar chart comparing tensile toughness of NMC/CNT and NMC/PVDF/CB. Bottom: Electrode thickness as a function of M/A for NMC/CNT composite cathodes. (C) Cross-sectional SEM image of the highest loading NMC/CNT composite. 0.5 wt% CNT was used to build up thickness, thus high C/A electrodes. The toughness for NMC/CNT composite cathode was >10 times greater than the traditional electrodes even at such a lower CNT content. This mechanical reinforcement increases the CCT, allowing the production of mechanically robust electrodes with thicknesses as high as ~800 $\mu$m for NMC/CNT, much larger than achievable with traditional binders (< 175 $\mu$m). (D) Second charge/discharge profiles of the NMC/CNT composite cathodes at a ~1/20 C-rate for a range of M/A between 20-155 mg/cm². (E) Discharge C/A of the composite cathodes as a function of M/A. The C/A of NMC/CNT cathodes scaled linearly with electrode M/A over the entire thickness range, reaching 30 mAh/cm², showing superlative performance than any of other studies. High-performance literature data are included for comparison with the details indicated in Table 4. The black stars (Li-cathode Lit 1) indicate high-C/A cathodes prepared by slurry-casting method and grey filled stars (Li-cathode Lit 2) indicate high-C/A cathodes prepared by special techniques such as using specific substrates (porous foam) or non-scalable/or complicated process (vacuum-filtration, template, sintering methods *etc.*). The slope in (E) indicates gravimetric capacity of ~190 mAh/g, confirming high electrochemical utilization, even at the high thicknesses. (F) C/A of NMC/CNT composite cathodes with various M/A depending on areal current density.

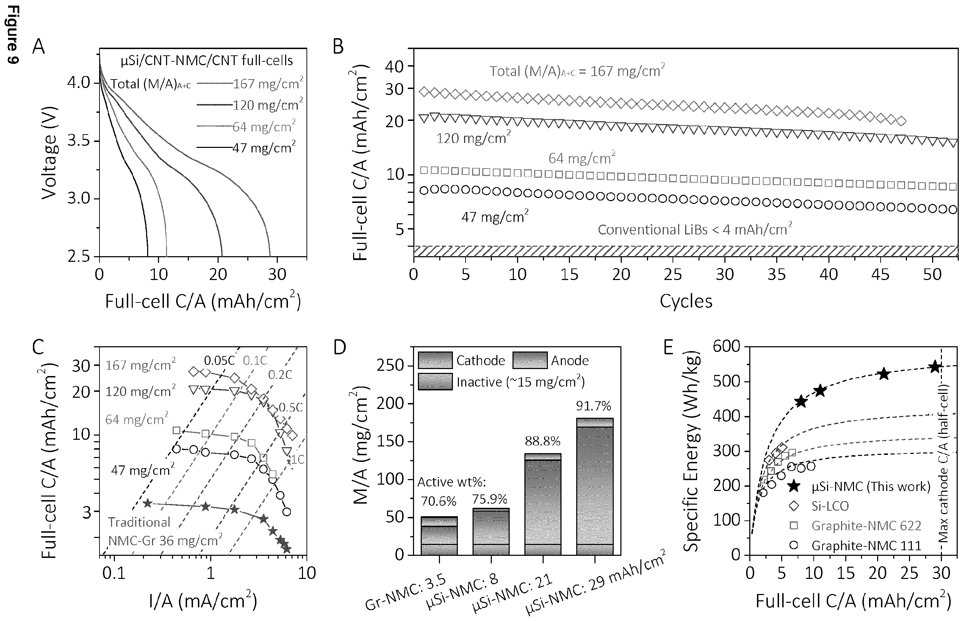

**Figure 9** illustrates the electrochemical performance of full-cell lithium-ion batteries made by pairing $\mu$-Si/CNT composite anodes with NMC/CNT composite cathodes. Total anode/cathode masses, (M/A)A+C varied from 47 to 167 mg/cm², with full-cell C/A, ranging from 8 to 29 mAh/cm². (A) Second discharge voltage-capacity curves for full-cells of varying (M/A)A+C tested at ~1/15 C-rate. (B) Cycling stability of full-cells with various (M/A)A+C (~1/15 C-rate). Commercial high-energy batteries typically have a maximum full-cell C/A of ~4 mAh/cm², as indicated by the violet hatched area. (C) Rate performance of full-cells with various (M/A)A+C with a traditional NMC-graphite full-cell for comparison. (D) Bar chart showing the contributions of active and inactive components as (M/A)C+A is increased, with data for the traditional full-cell from (C) shown for comparison. The low-rate areal capacity of the cell is given in the x-axis legend. (E) Specific energy as a function of full-cell C/A (this work = black stars) with various literature data for comparison (open symbols, see Table 6). The dashed lines are plots of equation 1.

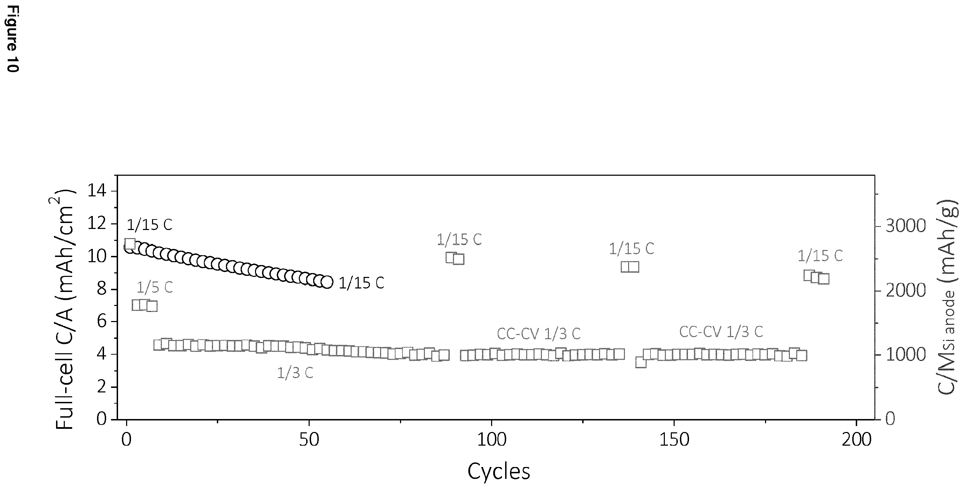

**Figure 10.** Cycling performance of high C/A full-cell (~11 mAh/cm²) at a different rate. Right y-axis indicates Si anode specific capacity in full cells, showing high utilization of Si.

## Detailed Description of the Drawings

Here, it is shown that the production of very thick electrodes which retain almost all of their intrinsic capabilities can be achieved *via* simultaneously boosting the electrical/mechanical properties of granular electrode materials by using, for example, carbon nanotubes (CNT), specifically in the form of segregated networks, as both binder and conductive additive, without any additional polymer or CB. By adding nanotubes (or metallic nanowires or a combination thereof) to high-performance anode/cathode materials such as silicon and $LiNi_xMn_yCo_zO_2$ (NMC), a new type of hierarchical composite is shown where the nanotubes arrange themselves into networked membranes that envelop the active material particles. These networks significantly improve the mechanical properties, allowing the fabrication of thick electrodes, and ensure their stability, even during repeated charge/discharge. At the same time the electrode conductivity is dramatically increased, facilitating fast charge distribution, even in thick electrodes. The production of extremely thick electrodes (up to 1000 $\mu$m) with $C_{SP}$ approaching theoretical values for each electrode material, enables the production of full-cells with areal capacities and specific energies considerably higher than any previous reports. The production involves simple and scalable production techniques, which can be applied to both anodes and cathodes and is compatible with any high-performance electrode material.

*Materials and Methods*

Slurry-casting

The hierarchical composite electrodes were prepared *via* a conventional slurry-casting method using a uniform CNT aqueous dispersion (0.2 wt% SWCNT in water, ~0.2 wt% PVP as a surfactant, Tuball, OCSiAl) and battery active materials (AMs) without adding any additional polymeric binder or carbon black (CB).

For anodes, the uniform CNT dispersion was mixed with micron-sized Si powder ($\mu$-Si) with a range of particle sizes (1-3 $\mu$m: denoted as 2 $\mu$m and 5, 10, 30, 45 $\mu$m size, all purchased from US Research Nanomaterials) and ground into a uniform slurry using a mortar and pestle. The CNT mass fraction, ($M_f$) in the resultant electrodes was controlled in the range of 0.05 - 20 wt% by simply changing the mass ratio between the $\mu$-Si and CNT dispersion. For instance, 8 ml of CNT dispersion was mixed with 200 mg of $\mu$-Si in order to obtain the electrode with 7.5 wt% CNT. Then the slurry was cast onto copper (Cu) foil using a doctor blade, then slowly dried at 40°C for 2 hours and followed by vacuum drying at 100°C for 12 hours. Alternatively, the doctor blade film formation step could be replaced by a vacuum filtration step. To remove a surfactant from the as-received CNT dispersion (~0.2 wt% PVP), the dried electrodes were then heat-treated in Ar gas at 700°C for 2 hours. By changing the height of doctor blade (200-2000 $\mu$m) while keeping the CNT $M_f$, electrodes with various thickness were obtained, ranging from 30-310 $\mu$m (M/A = 0.9 - 21.5 mg/cm$^2$).

For cathodes, NMC (LiNi$_{0.8}$Mn$_{0.1}$Co$_{0.1}$O2, MTI Corp.) was employed to mix with the uniform CNT aqueous dispersion. Typically, 5 ml of CNT was ground with 2 g of NMC to obtain the electrode with 0.5 wt% CNT. The resultant slurry was cast onto aluminium (Al) foil and dried at the same manner. CNT $M_f$ was controlled to be in the range between 0.01 - 10 wt% and varied electrode thickness, ranging from 40 - 800 $\mu$m (M/A = 6 - 155 mg/cm$^2$). The composite anode/cathode were denoted as "$\mu$-Si/CNT" and "NMC/CNT", respectively.

For the sake of comparison, nano-sized Si (n-Si) with different sizes (~25 nm and ~80 nm, US Research Nanomaterials) were employed to fabricate corresponding anodes by mixing with CNT dispersion in desired compositions and thicknesses.

In addition, traditional electrodes were also prepared using CB (Timical Super C65, MTI Corp.) and conventional binders, either PAA for Si anode or PVDF (EQ-Lib-PVDF, MTI Corp) for NMC cathode. Electrode thickness and composition were also controlled in the same manner.

Material Characterization

The morphology and micro-structure of Si/CNT anodes (or NMC/CNT cathodes) were examined by FE-SEM (Zeiss Ultra Plus, Zeiss) in a high vacuum mode with an acceleration voltage of 5 keV. The mass (M) and thickness (t) of the electrodes were determined using a microbalance (MSA6, Sartorious) and a digital micro-meter after subtracting the mass or thickness of the Al/Cu foils.

The structural properties of samples were characterized by X-ray diffraction (XRD, Bruker D5000 powder diffractometer) with a monochromatic Mo K$\alpha$ radiation source ($\lambda$ = 0.15406 nm). XRD patterns were collected between 10° < $\theta$ < 80°, with a step size of 2$\theta$ = 0.05° and a count time of 12 s/step.

Raman spectra of composite electrodes were acquired using a Witec Alpha 300 R with a 532 nm excitation laser and a spectral grating with 600 lines mm$^{-1}$. Characteristic spectra were obtained by averaging 20 discrete point spectra for each sample. Raman maps were generated for AM/CNT composites by acquiring 120 $\times$ 120 discrete spectra over an area of 60 $\times$ 60 $\mu$m. Maps representing the presence of CNT and AM (either Si or NMC) were generated by mapping the intensity of the CNT G band and the AM's characteristic band (Si at 520 cm$^{-1}$ or NMC A$_{1g}$ band).

The electrical conductivity of electrodes was measured using a four-point probe technique. The samples were prepared by the same slurry-casting method but they were coated onto a glass plate instead of Al/Cu foils to exclude the substrates' conductivity. Then, four parallel contact lines were deposited on the electrode surface using silver paint (Agar Scientific). The resistance of samples was measured using a Keithley 2400 source meter. The conductivity of samples was then calculated using the samples' geometric information (x-y length and thickness) obtained by digital caliper/micro-meter.

The mechanical measurements were conducted from free-standing samples using a Zwick Z0.5 Pro-Line Tensile Tester (100 N Load Cell) at a strain rate of 0.5 mm/min. The films were prepared by simply peeling off the electrodes from the substrate. Each data point was obtained by averaging the results from four measurements.

Electrochemical Characterization

The electrochemical properties of the electrodes were investigated using 2032-type coin cells (MTI Corp.) assembled in an Ar-filled glovebox (UNIlab Pro, Mbraun). Each working electrode was punched into discs with diameter = 12 mm. A Celgard 2320 was used as the separator for all coin cells.

For the half-cell electrochemical characterisation, the coin cells were assembled by pairing the working electrode with a Li-metal disc (diameter: 14 mm, MTI Corp.), the latter was used as the counter/reference electrode. 1.2 M lithium hexafluorophosphate ($LiPF_6$) in ethylene carbonate/diethyl carbonate/fluoroethylene carbonate (EC/DEC/FEC, 3:6:1 in v/v/v, BASF) with 2 wt% vinylene carbonate (VC, Sigma Aldrich) was used as the electrolyte for half-cell measurement.

The electrochemical properties of the Si anodes were measured within a voltage range of 0.005 - 1.2 V using Galvanostatic charge/discharge mode by a potentiostat (VMP3, Biologic). The NMC cathodes were measured within a voltage range of 3 - 4.3 V in the same manner. We note that the terms between charging/discharging are based on the full-cell LiB system. For the anode, charging/discharging correspond to the lithiation/delithiation process, respectively. The areal capacities (C/A) of the electrodes were obtained by dividing the measured cell capacity by the geometric electrode area (1.13 cm$^2$). To investigate the maximum accessible C/A of the electrodes, the cells were tested at a reasonably slow condition of 1/30 C-rate. The cyclabilities of the electrodes were evaluated at 1/15 C-rate after initial formation cycle at 1/30 C-rate. The discharge rate-capabilities of the electrodes were investigated using asymmetric charge/discharge conditions; the cells were charged at a fixed 1/30 C-rate then discharged at varied rates. For the post-mortem analysis, the cycled cells were carefully disassembled inside a glove box under inert atmosphere. The cycled electrodes were then rinsed with dimethyl carbonate (DMC) several times and dried inside the glove box at room temperature.

The full-cells were assembled by pairing our μ-Si/CNT anodes with NMC/CNT cathodes with various C/A (or M/A). The same sized cathode/anode disc (1.13 cm$^2$) were used to match the C/A of both electrodes, which were previously determined in the half-cell experiments. For full-cells, 1.2 M LiPF$_6$ in ethylene methyl carbonate/fluoroethylene carbonate (EMC/FEC, 95:5 in wt%, BASF) was used as the electrolyte. The N/P ratio, defined by the capacity ratio between the anode and cathode, was balanced to be ~1.1 (See Table 5 for the details of cathodes/anodes in full-cells). The assembled full-cells were then cycled at 1/15 C within a voltage range of 2.5 - 4.3 V after the initial formation cycle at 1/30 C-rate. The total C/A of the full-cell, (full-cell C/A), was obtained by dividing the measured cell capacity by the geometric electrode area (1.13 cm$^2$). The rate capabilities of the full cells were investigated using asymmetric charge/discharge conditions; the full cells were charged at ~1/30 C-rate then discharged at varied discharge current densities. For the sake of comparison, a traditional full-cell (C/A =~3.5 mAh/cm$^2$) was also assembled and tested in the same manner by pairing the NMC cathode (C/A = 3.5 mAh/cm$^2$) and graphite anode (C/A = 3.8 mAh/cm$^2$) prepared by CB-binder combination.

Table 1: Literature comparison of high areal capacity Li-ion battery electrodes

| Electrode type | | Method | Electrode areal capacity | Ref |
|---|---|---|---|---|
| Anode | Si nanowire-graphene composite | Vacuum filtration (Non-scalable) | 11 mAh cm$^{-2}$ | Adv Energy Mater 6, 1600918-n/a (2016). |
| | Si-graphene composite | Vacuum filtration (Non-scalable) | 6.5 mAh cm$^{-2}$ | Nano Lett 15, 6222-6228 (2015) |
| | Si nanowire | CVD growth (Non-scalable) | 7.1 mAh cm$^{-2}$ | J Power Sources 316, 1-7 (2016) |
| | Si nanowire | CVD growth (Non-scalable) | 15 mAh cm$^{-2}$ | Nano Lett 15, 3907-3916 (2015) |
| | Si graphene composite | CVD growth (Non-scalable) | 8.3 mAh cm$^{-2}$ | Energ Environ Sci 9, 2025-2030 (2016) |
| | Si nanowires | CVD growth (Non-scalable) | 9 mAh cm$^{-2}$ | Sci Rep-Uk 6 (2016) |

(continued)

| Electrode type | | Method | Electrode areal capacity | Ref |
|---|---|---|---|---|
| Cathode | LiFePO$_4$ | Slurry-coating onto porous Al foam (Using special substrate) | 8.4 mAh cm$^{-2}$ | J Power Sources 334, 78-85 (2016) |
| | LiFePO$_4$ | Slurry-coating onto porous metal foam (Using special substrate) | 8.8 mAh cm$^{-2}$ | Rsc Adv 5, 16702-16706 (2015) |
| | CNF-CNT-LiFePO$_4$ | Vacuum-filtration (Non-scalable) | 10.5 mAh cm$^{-2}$ | Adv Funct Mater 25, 6029-6040 (2015) |
| | NCM111 | Slurry-coating onto porous metal foam substrate (Using special substrate) | 12.5 mAh cm$^{-2}$ | J Power Sources 196, 8714-8718 (2011) |
| | LiCoO$_2$ | Magnetic templating (Complicated/non-scalable process) | 12~13.5 mAh cm$^{-2}$ | Nature Energy 1, 16099 (2016) |
| | LiFePO$_4$ coated onto conductive CNT textile | Coating onto CNT foam (Using special substrate) | ~26 mAh cm$^{-2}$ | Adv Energy Mater 1, 1012-1017 (2011) |
| | LiCoO$_2$ | Mechanically pressing method (Complicated/non-scalable process) | 49 mAh cm$^{-2}$ | Adv Mater 22, E139-+ (2010) |
| Full Cell | NMC111 cathode Graphite anode | Slurry-coating onto metal foam (Using special substrate) | 10.5 mAh cm$^{-2}$ | J Power Sources 196, 8714-8718 (2011) |

*Results*

To produce high-performance electrodes at low cost, the focus here is on anodes (cathodes are described above), choosing micron-sized silicon ($\mu$-Si) particles as the active material (AM). Such particles combine the high specific capacity of silicon (3579 mAh/g, maximum metastable alloying composition of $Li_{15}Si_4$ at ambient temperature) with a cost that is much lower than silicon nanoparticles (n-Si). However, $\mu$-Si is rarely used due to stability problems. Here it is shown that $\mu$-Si , or indeed other electrode materials, can be fabricated into high-performance composite electrodes by replacing traditional combinations (*i.e.* polymeric binder and CB-conductivity enhancer) with low-loading networks of CNTs. Importantly, these composite electrodes are produced by a simple, industry-compatible slurry-casting technique, whereby mixing a single-wall CNT aqueous dispersion with $\mu$-Si to form a uniform viscous slurry, allows direct casting onto Al/Cu substrates to yield robust composite films (Figure 1A). The CNTs could also be replaced by, or combined with, metallic nanowires.

These composites contain CNT networks which are very different both to those found in polymer-nanotube composites and those typically reported in papers on battery electrodes. Since the AM particle size (>1 $\mu$m for $\mu$-Si) is larger than the nanotube length (~1 $\mu$m), such composites cannot form standard nanotube networks. Rather, the excluded-volume associated with the particles drives the spontaneous formation of a segregated network, where the CNTs spontaneously form networked 2-dimensional membranes which wrap and interconnect the AM particles (Figure 1B), even at extremely low CNT mass-fractions ($M_f$). Cross-sectional SEM images of $\mu$-Si/CNT (here 5 $\mu$m Si particles) anodes at the different CNT $M_f$ show the progressive development of 2D CNT-membranes, with hierarchical structure appearing at ~1wt% and membranes becoming progressively denser/thicker as more CNTs are added (Figure 1C-E). Critically, such hierarchical structures do not form for composites containing small particles (Figure 1F) and clearly require large particle-size/nanotube-length ratios. High-magnification imaging shows the membranes to effectively wrap the Si particles and consist of entangled, van der Waals bonded networks of CNT bundles/rope (Figure 1G-H). Such membranes are expected to be particularly useful in battery electrodes due to their ability to simultaneously enhance conductivity and mechanical toughness, facilitate particle expansion as well as localizing Si fragments in the event of pulverization while allowing easy access of lithium ions.

Traditional polymer/CB-loaded battery electrodes combine moderate electrical conductivity with relatively poor mechanical toughness (toughness has been linked to electrode stability). Importantly, in Si/polymer/CB composite electrodes, the inventors found conductivity and toughness to be anti-correlated, making it impossible to prepare conductive yet tough electrodes (see Figure 3). However, because of the excellent electrical and mechanical properties of nanotube networks, the segregated-network composites of the invention are expected to display much greater electrical and mechanical performance. Composites of CNT mixed with both $\mu$-Si and n-Si particles were prepared for comparison (size range, 20 nm to 45 $\mu$m, see Figure 2A), in each case varying the CNT $M_f$. Both tensile toughness and electrical conductivity displayed very large increases at relatively low loading levels (Figure 2B-C and see full mechanical data in Figure 3). Importantly, the CNT loading required to obtain a given toughness or conductivity value fell with increasing silicon particle size as would be expected for segregated network composites. Toughness and conductivity for Si/CNT composites were $\times 500$ and $\times 1000$ times greater than the traditional electrodes at the near equivalent compositions while Si/CNT composites showed conductivity/toughness combinations many order magnitudes better than traditional composites (Figure 2D).

These composites were found to perform very well as lithium-ion battery anodes (Figure 2E). Interestingly, for different Si particle sizes, the 1st-cycle delithiation capacity (normalized to Si mass, C/$M_{Si}$) *versus* CNT content data (Figure 2F) followed a master curve, increasing rapidly before saturating very close to the theoretical capacity of Si (3579 mAh/g) for $M_f$ above ~2wt%. Near-theoretical values of C/$M_{Si}$ (Figure 2G) with very high 1st Columbic efficiencies of 85-90% were found for all particle sizes once $M_f$>2wt%. This contrasts with traditional Si/polymer/CB anodes which showed a large fall-off in the 1st-cycle capacity as the Si particle size was increased (Figure 2G). Anodes based on Si particles with sizes as high as 45 $\mu$m have never before been observed to approach theoretical capacity, demonstrating the superiority of the segregated network.

While all composite anodes were much more stable than traditional polymer/CB-loaded anodes, a significant fall-off in capacity with cycle number for larger $\mu$-Si particle sizes was observed (Figure 4A). However, the 20th-cycle capacity was found to remain very close to the theoretical capacity up to a particle size of 2 $\mu$m after which a significant degradation occurred (Figure 4B). While this implies that small particles perform better, materials cost must also be considered. The cost of Si particles falls significantly with particle size (Figure 4C) while, as low-cost CNTs are used, the total electrode cost is not significantly greater than Si/polymer/CB anodes. This allows one to calculate the charge stored per electrode cost for Si/CNT (7.5wt%) anodes for each particle size as shown in Figure 4D. This clearly shows the 2 $\mu$m sized Si particles (see Figure 4E-F for SEM images) to be the most cost-effective material as calculated from their electrode composition (Si/CNT = 92.5:7.5 or Si/PAA/CB = 80:10:10). It is worth noting that the micro-sized Si particles roughly $\times$10-fold less cost than the nano-sized Si products due to the simple/scalable manufacturing processes, thus resulting in a great advantage for the cost-effectiveness.

At this point, spontaneously formed segregated network composites of 2 $\mu$m Si particles mixed with CNT have been shown herein to display high conductivity, toughness and capacity without the high cost associated with nanoscale active materials. Here, these properties are utilized to achieve high-performance anodes. As described above, high areal capacity (C/A) requires large specific capacity (C/M) coupled with high mass loading (M/A). Importantly, the high toughness of the claimed composites should lead to significant increases in CCT. The measurements showed a traditional $\mu$-Si/polymer/CB combination with low toughness to display a CCT of ~98 $\mu$m, leading to severe cracking of thicker films (Figure 5A). However, the enhanced toughness of $\mu$-Si/CNT composites (>500-fold higher) leads to high CCTs, allowing the production of anodes with thickness in excess of 300 $\mu$m (cathode thickness >1000 $\mu$m), without any cracking (Figure 5A).

This allows the production of extremely thick $\mu$-Si/CNT anodes with record C/A of up to 45 mAh/cm$^2$ (Figure 5C). Importantly, the C/A of the claimed composite anodes scaled linearly with mass loading over the entire thickness range (bottom in Figure 5D) reaching values well beyond the state-of-the-art (comparison with open stars and see literatures in Tables 2 and 3).

Table 2. Literature comparison of the C/A for Si-based anodes. Other details such as the method, electrode composition, mass loading and specific capacity, are also included. For the M/A, the values were sorted based on the total electrode mass (Si + binder + conductive agent, $M_{Total}$/A,) as well as on the only active material mass ($M_{Si}$/A). Specific capacity values are presented in a same manner (both C/$M_{Total}$ and C/$M_{Si}$). The first anode of the first line (in bold), is an anode for the claimed invention.

| Fabrication method | Electrode composition | Mass loading ($M_{Total}$/A and $M_{Si}$/A) | Specific capacity (C/$M_{Total}$ and C/$M_{Si}$) | Max. areal capacity (C/A) |
|---|---|---|---|---|
| Slurry-casting method | | | | |
| **$\mu$-Si/CNT composite by slurry-casting** | **$\mu$-Si : CNT = 92.5 : 7.5** | **Total: 14.3 mg/cm$^2$ ($\mu$-Si: 13.2 mg/cm$^2$)** | **~3150 mAh/g @ 0.03 C ($\mu$-Si: ~3300 mAh/g)** | **45.4 mAh/cm$^2$** |

(continued)

| Fabrication method | Electrode composition | Mass loading ($M_{Total}/A$ and $M_{Si}/A$) | Specific capacity ($C/M_{Total}$ and $C/M_{Si}$) | Max. areal capacity (C/A) |
|---|---|---|---|---|
| Slurry-casting method | | | | |
| Ca-Alginate binder | Si : Ca-Alginate : CB 70 : 15 : 15 | 5.7 mg/cm$^2$ (Si: 4 mg/cm$^2$) | 2416 mAh/g @ 0.05 C (Si: 3450 mAh/g @ 1st cycle Si: 3150 mAh/g @ 2nd cycle) | 14 mAh/cm$^2$ |
| PAA-grafted Si | Si-PAA:PAA:AB = 78 : 2 : 20) | 5.77 mg/cm$^2$ (Si: 4.5 mg/cm$^2$) | 2379 mAh/g @ 0.05 C (Si: -3050 mAh/g @ 0.05 C) | 13.7 mAh/cm$^2$ |
| Mesoporous Si sponge | Si : CB : Na-CMC = 40 : 40 : 20 | 10 mg/cm$^2$ (Si: 4 mg/cm$^2$) | 600 mAh/g @ 0.06 mA cm$^{-2}$ (Si: 1500 mAh/g) | 6mAh/cm$^2$ |
| Graphene coated Si by CVD | Gr-Si: Li-PAA = 80 : 20 | 3.125 mg/cm$^2$ (Gr-Si: 2.5 mg/cm$^2$) | 1856 mAh/g @ 0.5 C (Gr-Si: 2320 mAh/g) | 5.8 mAh/cm$^2$ |
| Carbon coated Si | C-Si : CB : Na-alginate = 70 : 15 : 15 | 7.14 mg/cm$^2$ (C-Si : 5 mg/cm$^2$) | 630 mAh/g @ 0.1 C (Gr-Si: -900 mAh/g) | 4.5 mAh/cm$^2$ |
| PAA-PVA gel polymer binder | Si : CB : PAA-PVA binder = 60 : 20 : 20 | 4 mg/cm$^2$ (Si: 2.4 mg/cm$^2$) | 1075 mAh/g @ 4 A/g (Si: 1791 mAh/g) | 4.3 mAh/cm$^2$ |
| Self-healing binder | Si : CB : binder = 63.3 : 3.3 : 33.3 | 2.4 mg/cm$^2$ (Si: 1.6 mg/cm$^2$) | 1733 mAh/g @ 0.1 mA/cm$^2$ (Si: 2600 mAh/g) | 4.2 mAh/cm$^2$ |
| PAA/PANI IPN conducting polymer binder | Si: PAA/PANI IPN = 60: 40 | 1.6 mg/cm$^2$ (Si: 1 mg/cm$^2$) | 2250 mAh/g @ 0.1 C (Si: 3750 mAh/g) | 3.8 mAh/cm$^2$ |
| Pomegranate structured Si | Si : CB : PVDF = 80 : 10 : 10 | 3.9 mg/cm$^2$ (Si: 3.12 mg/cm$^2$) | 941 mAh/g @ 0.03 mA/cm$^2$ (Si: 1176 mAh/g) | 3.7 mAh/cm$^2$ |
| Organogel electrolyte binder | Si : CB : binder = 80 : 10 : 10 | 1.6 mg/cm$^2$ (Si: 1.3 mg/cm$^2$) | 2215 mAh/g @ 0.07 mA cm$^{-2}$ (Si: 2770 mAh/g) | 3.6 mAh/cm$^2$ |
| PEDOT:PSS + CMC binder | Si : CB : PEDOT:PSS : CMC = 70 : 10 : 10 : 10 | 1.5 mg/cm$^2$ (Si: 1.05 mg/cm$^2$) | 2205 mAh/g @ 0.2 A/g (Si: 3150 mAh/g) | 3.3 mAh/cm$^2$ |
| SPEEK-PSI-Li binder | Si : CB : SPEEK-PSI-Li 60 : 20 : 20 | 2 mg/cm$^2$ (Si: 1.2 mg/cm$^2$) | 1650 mAh/g @ 0.2 A/g (Si: 2750 mAh/g) | 3.3 mAh/cm$^2$ |
| PEDOT:PSS conducting polymer | Si : PEDOT/PSS = 80 : 20 | 1.5 mg/cm$^2$ (Si: 1.2 mg/cm$^2$) | 2200 mAh/g @ 0.5 A/g (Si: 2750 mAh/g) | 3.3 mAh/cm$^2$ |
| Nonfilling carbon coated porous Si | Si : CB : PVDF = 80 : 10 : 10 | 2.5 mg/cm$^2$ (Si: 2.01 mg/cm$^2$) | 1281 mAh/g @ 0.05 mA/cm$^2$ (Si: 1602 mAh/g) | 3.2 mAh/cm$^2$ |
| Si nanocrystal embedded SiOx nanocomposite | Si : CB : PVDF = 70 : 15 : 15 | 2.14 mg/cm$^2$ (Si: 1.5 mg/cm$^2$) | 1340 mAh/g @ 0.2 A/g[1] (Si: 1914 mAh/g) | 2.9 mAh/cm$^2$ |
| Defect abundant Si Nanorods | Si : graphite : CB : binder = 56 : 14: 15 : 15 | 3.4 mg/cm$^2$ (Si: 1.9 mg/cm$^2$) | 756 mAh/g @ 0.1 A/g[1] (Si: 1421 mAh/g) | 2.7 mAh/cm$^2$ |

(continued)

| Fabrication method | Electrode composition | Mass loading ($M_{Total}/A$ and $M_{Si}/A$) | Specific capacity ($C/M_{Total}$ and $C/M_{Si}$) | Max. areal capacity (C/A) |
|---|---|---|---|---|
| Slurry-casting method | | | | |
| PPyE conducting polymer | Si: PPyE = 66.6 : 33.3 | 2 mg/cm$^2$ (Si: 1.34 mg/cm$^2$) | 1243 mAh/g @ 0.226 mA/cm$^2$ (Si: 1866 mAh/g) | 2.5 mAh/cm$^2$ |
| CNT and PEDOT:PSS binder | Si : CNT/PEDOT = 57 : 43 | 2 mg/cm$^2$ (Si: 1 mg/cm$^2$) | 1100 mAh/g @ 0.2 A/g (Si: 2180 mAh/g) | 2.2 mAh/cm$^2$ |
| Si-based multicomponent anodes | Si : CB : PVDF = 80 : 10 : 10 | 3.75 mg/cm$^2$ (Si: 3 mg/cm$^2$) | 480 mAh/g @ 0.05 C (Si: 600 mAh/g) | 1.8 mAh/cm$^2$ |
| Self-healing binder | Si : binder : SuperP = 60 : 20 : 20 | 1.5 mg/cm$^2$ (Si: 0.9 mg/cm$^2$) | 933 mAh/g @ 0.3 A/g (Si: 1500 mAh/g) | 1.4 mAh/cm$^2$ |
| Use of special techniques (CVD growth onto foam substrate or vacuum filtration) | | | | |
| CVD growth of Si nanowires onto carbon fiber foam | Si film *via* CVD | Si/C fiber: 12.8 mg/cm$^2$ (Si: 9 mg/cm$^2$) | ~1172 mAh/g @ 0.1 mA cm$^{-2}$ (Si: ~1666 mAh/g) | 15 mAh/cm$^2$ |
| Si nanowire-graphene composite papers | Si : graphene = 80 : 20 | 6 mg/cm$^2$ (Si: 4.8 mg/cm$^2$) | 1830 mAh/g @ 0.2 A/g (Si: 2291 mAh/g @ 0.2 A/g) | 11 mAh/cm$^2$ |
| CVD growth of Si nanowires onto carbon fiber foam | Si film *via* CVD | Si/C fiber: 8.7 mg/cm$^2$ Si: 2.2 mg/cm$^2$ | Si: 4090 mAh/g @ 0.5 mA/cm$^2$ | 9 mAh/cm$^2$ |
| CVD growth of Si onto graphene foam | Si film *via* CVD | Si: 3.2 mg/cm$^2$ | Si: 2593 mAh/g @ 0.5 mA/cm$^2$ | 8.3 mAh/cm$^2$ |
| DC sputtering onto Cu foil | Si film *via* sputtering | Si: 2.1 mg/cm$^2$ | Si: 3500 mAh/g @ 0.5 mA/cm$^2$ | 7.5 mAh/cm$^2$ |
| CVD growth of Si nanowires | Si film *via* CVD | Si: 2.47 mg/cm$^2$ | Si: 2874 mAh/g @ 0.02 C | 7.1 mAh/cm$^2$ |
| Si-graphene composite by vacuum filtration | Si : graphene = 64 : 36 | 3.7 mg/cm$^2$ (Si: 2.4 mg/cm$^2$) | 2745 mAh/g @ 0.8 A/g (Si: 1757 mAh/g) | 6.5 mAh/cm$^2$ |

Table 3. Cyclability comparison among high C/A Si-anode studies with high C/A (> 4 mAh/cm$^2$), selected from Table 2. The first line in bold is the anode of the claimed invention.

| Fabrication method | Mass loading ($M_{Total}$/A and $M_{Si}$/A) | Max. areal capacity (C/A) | Capacity retention |
|---|---|---|---|
| **μ-Si/CNT composite by slurry -casting** | **Total: 14.3 mg/cm$^2$ (μ-Si: 13.2 mg/cm$^2$)** | **45.4 mAh/cm$^2$** | 14.3 mg/cm$^2$ anode: 45 → 40 mAh/cm$^2$ @ 2nd (cell dead after 2 cycles due to Li-metal degradation) |
| | | | 10.3 mg/cm$^2$ anode: 32 → 28 mAh/cm$^2$ @ 10th |
| | | | 7.9 mg/cm$^2$ anode: 24 → 23 mAh/cm$^2$ @ 10th |
| | | | 5.7 mg/cm$^2$ anode: 17 → 15 mAh/cm$^2$ @ 20th |
| | | | 3.8 mg/cm$^2$ anode : 13 → 10 mAh/cm$^2$ @ 30th |
| | | | 2.8 mg/cm$^2$ anode : 8 → 6.5 mAh/cm$^2$ @ 30th |
| | | | 0.9 mg/cm$^2$ anode : 2.7 → 2.4 mAh/cm$^2$ @ 50th |
| CVD growth of Si nanowires onto carbon foam | Si/C fiber: 12.8 mg/cm$^2$ Si: 9 mg/cm$^2$ | 15 mAh/cm$^2$ | 8.63 → 5.26 mAh/cm$^2$ @ 100th |
| Ca-Alginate binder | 5.7 mg/cm$^2$ (Si: 4 mg/cm$^2$) | 14 mAh/cm$^2$ | 12.5 → 10 mAh/cm$^2$ @ 50th → 9 mAh/cm$^2$ @ 100th |
| Si nanowire-graphene composite papers | 6 mg/cm$^2$ (Si: 4.8 mg/cm$^2$) | 11.0 mAh/cm$^2$ | Not shown for high C/A electrode |
| CVD growth of Si nanowires onto carbon fiber foam | Si: 2.2 mg/cm$^2$ | 9 mAh/cm$^2$ | 9 → 4 mAh/cm$^2$ @ 50th |
| CVD growth of Si nanowires | Si: 2.47 mg/cm$^2$ | 7.1 mAh/cm$^2$ | 5.3 → 3.3 mAh/cm$^2$ @ 50th → 2.5 mAh/cm$^2$ @ 100th |
| Si-graphene composite by vacuum filtration | 3.7 mg/cm$^2$ (Si: 2.4 mg/cm2) | 6.5 mAh/cm$^2$ | 6.5 → 6.2 mAh/cm$^2$ @ 50th → 5.8 mAh/cm$^2$ @ 80th |
| Mesoporous Si sponge | 10 mg/cm$^2$ (Si: 4 mg/cm$^2$) | ~6 mAh/cm$^2$ | 5 → 4.2 mAh/cm$^2$ @ 35th |
| Graphene coated Si by CVD | 3.125 mg/cm$^2$ (Gr-Si: 2.5 mg/cm$^2$) | ~5.8 mAh/cm$^2$ | 5.5 → 3.9 mAh/cm$^2$ @ 50th → 3 mAh/cm$^2$ @ 100th |
| PAA-PVA gel polymer binder | 4 mg/cm$^2$ (Si: 2.4 mg/cm$^2$) | 4.5 mAh/cm$^2$ | 4.5 → 4.1 mAh/cm$^2$ @ 50th |

Crucially, this can be achieved while retaining the specific capacity close to its theoretical value (top in Figure 5D). Such extremely thick electrodes are relatively stable (Figure 5E), probably because the CNT membrane allows expansion and contraction of the μ-Si without any electrode cracking. Post-mortem analysis after cycling (Figure 5F) shows that the CNT-membrane has been preserved with a little change in the hierarchical structure, while Li-metal counter electrode shows severe degradation (see Li-metal degradation issue in Figure 6). From this, it is expected that the CNT membrane will limit the loss of small μ-Si particles which might result from pulverization. Unsurprisingly, for such thick electrodes and large AM particles, some capacity falloff at high rates is not observed (Figure 5G). However, it is not as significant as might be expected, presumably because the high conductivity associated with the segregated nanotube network allows fast charge distribution.

The key to the performance enhancements described above lies in the development of the segregated nanotube network to give a porous membrane which wraps the AM particles. Such network formation is not limited to μ-Si AM

particles but can be achieved for any particulate material with particle size greater than the nanotube length. This has been demonstrated herein for $LiNi_{0.8}Mn_{0.1}Co_{0.1}O_2$ cathode material (denoted as NMC, see electrical and mechanical properties set out in Figure 7). The optimized NMC/CNT composite cathodes ($M_f$ =0.5wt%) also reach theoretical capacity ($\sim$190 mAh/g @ 1/20 C) for the entire thickness range (up to 800 $\mu$m , M/A=155 mg/cm$^2$, see electrochemical characterization in Figure 8), leading to C/A as high as 30 mAh/cm$^2$, larger than any other reports (see comparison Table 4).

Table 4 Literature comparison of the C/A for Li-containing metal-oxide cathodes ($Li_xM_yO_z$, M = Ni, Mn, Co, Fe, etc. or the combination of more than two components). Other details are also included. For the M/A and specific capacity, we sorted out the values based on the total electrode mass ($MTotal/A$,) as well as on only the active material mass ($MAM/A$). The composite in the first row (in bold) is the NMC/CNT composite of the claimed invention.

| Fabrication method | Electrode composition | Mass loading ($M_{Total}$/A and $M_{AM}$/A) | Specific capacity ($C/M_{Total}$ and $C/M_{AM}$) | Max. areal capacity (C/A) |
|---|---|---|---|---|
| Slurry-casting method | | | | |
| **NMC/CNT composite by slurry-casting** | **NMC811 : CNT = 99.5: 0.5** | **Total: 155 mg/cm2 (NMC: $\sim$154 mg/cm$^2$)** | **190 mAh/g @ 1/20 C (NMC:$\sim$191 mAh/g)** | **29.5 mAh/cm$^2$** |
| Slurr y -casted NMC111 electrode | NMC111 : CB : graphite: PVDF =90 : 3 : 4 : 3 | 72 mg/cm$^2$ (NMC: 64.8 mg/cm$^2$) | 137 mAh/g @ 15.5 mA/g (NMC: 152 mAh/g) | 9.9 mAh/cm$^2$ |
| | | 67 mg/cm$^2$ | $\sim$ 120 mAh/g | $\sim$8 mAh/cm$^2$ |
| | | 52 mg/cm$^2$ | $\sim$ 125 mAh/g | $\sim$6.5 mAh/cm$^2$ |
| Slurry-casted NMC622 electrode | NMC622 : CB : PVDF = 91.5 : 4.4 : 4.1 | 41 mg/cm$^2$ (NMC: 37.6 mg/cm$^2$) | 161 mAh/g @ 0.1 C (NMC: 176 mAh/g) | 6.6 mAh/cm$^2$ |
| | | 34.1 mg/cm$^2$ | 161 mAh/g | 5.5 mAh/cm$^2$ |
| | | 27.4 mg/cm$^2$ | 161 mAh/g | 4.4 mAh/cm$^2$ |
| Slurry-casted NMC111 electrode | NMC111 : CB : PVDF = 85 : 7 : 8 | 28 mg/cm$^2$ (NMC: 24 mg/cm$^2$) | 132 mAh/g @ 0.1C (NMC: 154 mAh/g) | 3.7 mAh/cm$^2$ |
| Use of special techniques or substrates (CNT film, thick carbon/metal foam substrates, etc.) | | | | |
| LiFePO$_4$ coated onto conductive CNT textile | LFP : CB : PVDF =70 : 20 : 10 ." | 240 mg/cm$^2$ (LFP: 168 mg/cm$^2$) | 108 mAh/g @ 0.5 mA/g (LFP: 155 mAh/g) | $\sim$26 mAh/cm$^2$ |
| Thick LFP, LTO by Plasma Sintering | LFP or LTO : CB = 90 : 10 | LFP: 150 mg/cm$^2$ | 150 mAh/g @ 0.05 C | 21 mAh/cm$^2$ (LFP) |
| | | LTO: 152 mg/cm$^2$ | 167 mAh/g @ 0.05 C | 25.5 mAh/cm$^2$ (LTO) |
| Thick LiCoO$_2$ by magnetic templating | LCO : binder = 97.5 : 2.5 | Unknown (Estimated M/A : $\sim$ 96 mg/cm$^2$) | 140 mAh/g @ 0.05 C | 12$\sim$13.5 mAh/cm$^2$ |
| Electrospraying/ spinning of LMNO | LMNO : MWCNT : PAN = 72 : 3.6 : 24.4 | 80 mg/cm$^2$ (LMNO: 57 mg/cm$^2$) | 162 mAh/g @ 0.2 C (LMNO: 220 mg/cm$^2$) | 13 mAh/cm$^2$ (for multi-stacked film) |
| Slurry-coating NCM111 onto porous metal foam substrate | NCM : PVDF : CB : Graphite = 84 : 9 : 3.5 : 3.5 | 106 mg/cm$^2$ (NCM: 89 mg/cm$^2$) | 118 mAh/g @ 1/50 C (NCM: 140 mAh/g) | 12.5 mAh/cm$^2$ |
| Vacuum-filtrated CNF-CNT-LiFePO$_4$ film | LFP : CNT : CNF = 80 : 15 : 5 | 112.5 mg/cm$^2$ (LFP: 90 mg/cm$^2$) | 93 mAh/g @ 0.2 C (LFP: 116 mAh/g) | 10.5 mAh/cm$^2$ |

(continued)

| Use of special techniques or substrates (CNT film, thick carbon/metal foam substrates, etc.) | | | | |
|---|---|---|---|---|
| Slurry-coating LiFePO$_4$ onto porous metal foam substrate | LFP/C : CB : PVDF = 75 : 15 : 10 | 75.1 mg/cm$^2$ (LFP: 56.3 mg/cm$^2$) | 117 mAh/g @ 1 mA/cm$^2$ (LFP: 156 mAh/g) | 8.8 mAh/cm$^2$ |
| Slurry-coating LiFePO$_4$ onto porous A1 foam | LFP : CB : CMC/PMA = 100 : 6.8 : 5 | 72 mg/cm$^2$ (LFP: 64.4 mg/cm$^2$) | 117 mAh/g @ 0.2 C (LFP: 130 mAh/g) | 8.4 mAh/cm$^2$ |
| LiCoO$_2$ NW free-standing film by vacuum- filtration | LCO : Graphene = 83.3 : 16.6 | Total: 40 mg/cm$^2$ (LCO: 33.32 mg/cm$^2$) | 125 mAh/g (LCO: 150 mAh/g) | 5 mAh/cm$^2$ |
| LiCoO$_2$/CNT free-standing film by vacuum-filtration | LCO : CB : PVDF = 77.5 : 12.5 : 10 (CNT as substrate) | 16.1 mg/cm$^2$ (LCO: 12.5 mg/cm$^2$) | 91 mAh/g @ 0.25 C (LCO: 117 mAh/g) | 1.46 mAh/cm$^2$ |

The ability to produce both anodes and cathodes with very high areal capacities allows one to produce high-performance full-cells. By keeping the anode/cathode thickness ratios at the level required to match areal capacities but increasing the total anode plus cathode mass loading, (M/A)$_{A+C}$, full-cells were produced with record C/A up to 29 mAh/cm$^2$ (Figure 9A, and Table 5). It is worth noting that the full-cell C/A is limited by the cathode (Maximum cathode C/A=30 mAh/cm$^2$ and anode C/A=45 mAh/cm$^2$), reinforcing the need to developing high-C$_{SP}$ cathode materials. These electrodes were surprisingly stable (Figure 5B and see long-term cycles in Figure 10) and had rate performances similar to the individual electrodes (Figure 5C), yielding performance far beyond traditional NMC-graphite electrodes. One advantage of these composites is that because the electrodes can be made so thick, the inactive component (Al/Cu foils, separator *etc*.) becomes a very small fraction of the whole, thus increasing the overall energy density (Figure 5D).

Table 5. Details of the full-cells with various total electrode mass loading, (M/A)$_{A+C}$ = Anode M/A + Cathode M/A. The anode/cathode M/A indicate mass per unit area of each electrode excluding Al or Cu substrate.

| (M/A)$_{A+C}$ (mg/cm$^2$) | Full-cell C/A (mAh/cm$^2$) | Full-cell C/M (mAh/g) | *Full-cell E/A (mWh/cm$^2$) | **Full-cell E$_{SP}$ (Wh/kg) |
|---|---|---|---|---|
| 47.1 (Anode, 3.1 + Cathode, 44) | 8.1 | 171.9 | 27.4 | 441 |
| 64.3 (Anode, 4.4 + Cathode, 59.9) | 10.9 | 169.5 | 37.1 | 473 |
| 119.5 (Anode, 8.5 + Cathode, 111) | 20.6 | 172.4 | 70.1 | 522 |

(continued)

| (M/A)$_{A+C}$ (mg/cm$^2$) | Full-cell C/A (mAh/cm$^2$) | Full-cell C/M (mAh/g) | *Full-cell E/A (mWh/cm$^2$) | **Full-cell E$_{SP}$ (Wh/kg) |
|---|---|---|---|---|
| 166.5 (Anode, 11.5 + Cathode, 155) | 28.8 | 172.9 | 98.3 | 542 |

* The full-cell areal energy (E/A, mWh/cm$^2$) was calculated as follows,

$$E/A = \frac{\int V(t) \cdot I dt}{A} \tag{4}$$

where V, I, t and A, are cell voltage, applied discharge current, discharge time and the cell electrode area, respectively.
** The full-cell specific energy (E$_{SP}$, Wh/kg) was calculated as follows,

$$E_{SP} = \frac{E}{M_{Total\_cell}} = \frac{E/A}{M_{Total\_cell}/A} = \frac{E/A}{\dfrac{M_{Cathode}}{A} + \dfrac{M_{Anode}}{A} + \dfrac{M_{Inactive}}{A}} \tag{5}$$

where M$_{Cathode}$, M$_{Anode}$ and M$_{Inactive}$ are the mass for the cathode, anode, and inactive components (Al/Cu foils and separator), respectively. To calculate E$_{SP}$ in a practical way, the total mass of the electrodes as well as the inactive components, including Al/Cu foils and separator, were considered. Here M/A for Al, Cu and separator are 4, 9 and 2 mg/cm$^2$, respectively, thus total M$_{Inactive}$/A is 15 mg/cm$^2$. Then Esp can be calculated from the values for the full-cell areal energy and M/A for the cathode/anode. Considering the mass of both electrodes and inactive components, the specific energy, E$_{SP}$, for the full-cells, along with high-C/A cells from other studies were calculated and plotted *versus* the corresponding full-cell areal capacity, (C/A)$_{cell}$ in Figure 9E (see calculations and literatures in Table 6). This plot shows that the high-C/A full-cells delivered much higher E$_{SP}$ (up to 540 Wh/kg) than any other reports (<310 Wh/kg), highlighting their superlative performance. The relationship between E$_{SP}$ and (C/A)$_{Cell}$ can be illustrated *via* a simple relationship:

$$E_{SP} = \frac{V}{\dfrac{1}{C_{SP,Cathode}} + \dfrac{1}{C_{SP,Anode}} + \dfrac{(M/A)_{Inactive}}{(C/A)_{Cell}}} \tag{6}$$

where V, C$_{SP,Cathode}$, C$_{SP,Anode}$ and (M/A)$_{Inactive}$ are the average operating voltage, cathode/anode gravimetric capacity and the inactive components' M/A. Plotting equation 6 for each system shows the curves saturate at high (C/A)$_{Cell}$ at a value determined by C$_{SP}$ of the lower performing electrode, generally the cathode. As shown in Figure 9E, the curve representing the data of the battery of the claimed invention approaches 540 Wh/kg at the highest (C/A)$_{Cell}$ achieved (29 mAh/cm$^2$), close to saturation. This means that the composite architecture has allowed the inventors to approach the absolute maximum C$_{SP}$ possible for the cathode material used. This implies that once more advanced cathode materials (e.g. Li2S) become widely available, this approach would be expected to allow commensurate increases in E$_{SP}$.

Table 6: Literature comparison of full-cell LiBs with the high C/A. M$_{Total}$/A is the areal loading mass of the total electrode components (AM + conducting agent + binder). The composite in the first row (in bold) is the composite of the claimed invention.

| Materials & methods | Cathode M$_{Total}$/A | Anode M$_{Total}$/A | Full-cell C/A | *Full-cell E$_{SP}$ |
|---|---|---|---|---|
| Li$_x$Mn$_y$O$_z$-Si | | | | |
| **μ-Si/CNT NMC/CNT by slurry-casting** | **Total: 44 ~155 mg/cm$^2$ (NMC: 99.5 wt%)** | **Total: 3 ~ 11.5 mg/cm$^2$ (μ-Si: 92.5 wt%)** | **8 ~ 29 mAh/cm$^2$** | **441 ~ 542 Wh/kg** |
| LCO nanowire (NW) Si NW by filtration | Total: 40 mg/cm$^2$ (LCO: 83.3 wt%) | Total: 3 mg/cm$^2$ (Si: 80 wt%) | 5 mAh/cm$^2$ | 310 Wh/kg |

(continued)

| Materials & methods | Cathode $M_{Total}$/A | Anode $M_{Total}$/A | Full-cell C/A | *Full-cell $E_{SP}$ |
|---|---|---|---|---|
| $Li_xMn_yO_z$-Si | | | | |
| LCO Si-graphene by slurry-casting | Total: ~ 23 mg/cm$^2$ (LCO: ~95 wt%) | Total: 1.5 mg/cm$^2$ (Si-graphene: 80 wt%) | 3 mAh/cm$^2$ | 273 Wh/kg |
| NMC/LCO SiO-C by slurry-casting | Total: 29.5 mg/cm$^2$ (NMC/LCO: 97.25 wt%) | Total: 4.46 mg/cm (SiO-C: 90 wt%) | ~4 mAh/cm$^2$ | 294 Wh/kg |
| $Li_xMn_yO_z$-Graphite | | | | |
| NMC111 Graphite by slurry-casting | Total: 82 mg/cm$^2$ (NMC111: 90 wt.%) | Total: 38 mg/cm$^2$ (Graphite: 90 wt.%) | ~9.6 mAh/cm$^2$ | 256 Wh/kg |
| | 67 mg/cm$^2$ | 33 mg/cm$^2$ | ~8 mAh/cm$^2$ | 250 Wh/kg |
| | 52 mg/cm$^2$ | 25 mg/cm$^2$ | ~6.5 mAh/cm$^2$ | 254 Wh/kg |
| | 42 mg/cm$^2$ | 20 mg/cm$^2$ | ~4.9 mAh/cm$^2$ | 229 Wh/kg |
| | 30 mg/cm$^2$ | 15 mg/cm$^2$ | ~3.4 mAh/cm$^2$ | 204 Wh/kg |
| | 18 mg/cm$^2$ | 9 mg/cm$^2$ | ~2.1 mAh/cm$^2$ | 180 Wh/kg |
| NMC622 Graphite by slurry-casting | Total: 41.1 mg/cm$^2$ (NMC622: 91.5 wt. %) | Total: 24.5 mg/cm$^2$ (Graphite: 95.7 wt.%) | 6.6 mAh/cm$^2$ | 295 Wh/kg |
| | 34.1 mg/cm$^2$ | 20 mg/cm$^2$ | 5.5 mAh/cm$^2$ | 287 Wh/kg |
| | 27.4 mg/cm$^2$ | 16.6 mg/cm$^2$ | 4.4 mAh/cm$^2$ | 268 Wh/kg |
| | 20.8 mg/cm$^2$ | 13.1 mg/cm$^2$ | 3.3 mAh/cm$^2$ | 243 Wh/kg |
| | 13.7 mg/cm$^2$ | 7.6 mg/cm$^2$ | 2.2 mAh/cm$^2$ | 218 Wh/kg |
| NMC111 Graphite onto metal foam by slurry-casting | Total: 105 mg/cm$^2$ (NMC111: 84 wt.%) | Total: 30 mg/cm$^2$ (Graphite: 93 wt.%) | 10.5 mAh/cm$^2$ | 252 Wh/kg |
| *Full-cell $E_{SP}$ for references was also calculated based on the total mass of the electrodes as well as the inactive components (Al/Cu foils and separator); the values for the inactive components' M/A were considered to be same as ours (total $M_{Inactive}$/A: 15 mg/cm$^2$). | | | | |

While nanotubes have been used before to improve electrode conductivity, segregated networks - which are much more appropriate to realistic electrode materials - have not been reported, nor have spontaneously formed segregated networks. In addition to unprecedented conductivity enhancement, these spontaneously formed segregated networks dramatically increase mechanical robustness, promoting stability and allowing the production of extremely thick electrodes. In addition, wrapping the AM particles in a flexible, porous 2-dimensional membrane facilitates stable, repeatable, expansion/contraction of the lithium-storing material without impeding lithium diffusion. In addition, these membranes should keep silicon fragments localized even after pulverization, further promoting stability.

Compared to electrodes prepared from traditional mixtures of active material and polymer-binder and conductive-additive, the spontaneously formed segregated networks of the composite of the claimed invention make an electrode comprising said composite having very high mechanical toughness. This toughness allows very thick electrodes to be made because it prevents crack formation during charging/discharging (mud-cracking effect) and improves stability. These thick electrodes store more Li ions and yield higher energy density.

Compared to electrodes prepared from traditional mixtures of active material and polymer-binder and conductive-additive, these networks make the electrode have very high conductivity. This conductivity allows the electrode to reach its theoretical Li storage capacity (Li ions per unit mass). The very high conductivity facilitates this maximisation of capacity, even for very thick electrodes.

The segregated network of the composite of the claimed invention spontaneously forms a 2D membrane which acts as a scaffold to hold the active material particles in place.

All the above can be achieved using CNT contents of 0.25-7.5wt% (or metallic nanowires or a combination thereof). This is much less than the 20wt% or even 30wt% of the polymer-binder and conductive-additive used in traditional batteries. The dispersion of the CNT in the composite provides the architecture for an electrode. The CNTs spontaneously self-organise or self-arrange themselves around the particulate active materials to form the membranes which are locally 2-dimensional but extend throughout the electrode wrapping all particles. The 2D membranes wrap around the particles and fill space within the electrode architecture. The membranes can be considered to be a fractal object with fractal dimensions of between 2 and 3. The length of the particles are larger than the CNTs (or metallic nanowires) by a factor of, at most, 1:2. Without any polymeric binders or carbon black in the composite, more active material can be added to the composite to reach the theoretical maximum capacity when used in thick electrodes.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

## Claims

1.  A composite for use as an electrode, the composition comprising a homogenously distributed and spontaneously formed segregated network of carbon nanotubes, metallic nanowires or a combination thereof, and a particulate active material, in which no additional polymeric binder or conductive-additive are required.

2.  The composite of Claim 1, wherein the composite comprises from 0.1 wt% to 10 wt% of the homogenously distributed spontaneously formed segregated network of carbon nanotubes, metallic nanowires or a combination thereof.

3.  The composite of Claim 1 or Claim 2, wherein the carbon nanotubes, metallic nanowires or combination thereof, are dispersed in either an organic solvent alone or an organic solvent water-stabilised with 0.2 wt% to 2 wt% surfactant.

4.  The composite of any one of the preceding claims, in which the metallic nanowires consist of silver, gold, platinum, palladium or nickel, or any metallic nanowire coated with a noble metal.

5.  The composite of any one of the preceding claims, wherein the particulate active material is selected from micron-sized silicon powder, lithium, sulphur, graphene, graphite, and lithium nickel manganese cobalt oxide (NMC, $LiNi_xMn_yCo_zO_2$ where x+y+z = 1), lithium cobalt oxide (LCO), lithium nickel cobalt aluminium oxide (NCA), lithium iron phosphate (LFP), lithium titanium oxide (LTO) alloying materials (Si, Ge, Sn, P etc.), chalcogenides (S, Se, Te), metal halides (F, Cl, Br, I), and any other suitable battery material.

6.  The composite of any one of the preceding claims, wherein the composite comprises from 90 wt% to 99.9 wt% of the particulate active material.

7.  The composite of any one of the preceding claims, in which the ratio of the length of the carbon nanotubes or metallic nanowires and the active material particles is at most 1:1.

8.  The composite of any one of the preceding claims for use as an electrode in an energy storage device such as a battery, a supercapacitor, an electrocatalyst, or a fuel cell.

9.  A positive electrode or negative electrode comprising the composite of Claim 1.

10.  The positive electrode of Claim 9, wherein the carbon nanotube, metallic nanowires or combination thereof have a mass fraction (Mf) in the electrode of 0.01 - 25 wt%.

11.  The negative electrode of Claim 9, wherein the carbon nanotube, metallic nanowires or combination thereof have a mass fraction (Mf) in the electrode of 0.001 - 15 wt%.

12.  The positive electrode of Claim 9 and Claim 10 and the negative electrode of Claim 9 and Claim 11, wherein the positive and negative electrodes each have a thickness of between 200$\mu$m and 1000$\mu$m.

13.  A non-rechargeable battery or a rechargeable battery comprising an anode material, a cathode material, and an electrolyte, wherein the anode material and the cathode material comprise the composite of Claim 1.

14. A method for producing a positive or a negative electrode, the method comprising mixing an aqueous dispersion of carbon nanotubes or metallic nanowires, or a combination thereof, with a particulate active material powder to form a mixture, and depositing the mixture onto a substrate to form a homogenously distributed spontaneously formed segregated network that yields a robust, flexible electrode.

15. The method of Claim 15, wherein the mixture of the carbon nanotubes or metallic nanowires, or combination thereof, with the particulate active material has a viscosity of approximately 0.1 Pa.s at a shear rate of 100 s$^{-1}$.

**Figure 1**

Figure 2

Figure 3

**Figure 4**

Figure 5

**Figure 6**

Figure 7

Figure 8

Figure 9

Figure 10

Europäisches
Patentamt

European
Patent Office

Office européen
des brevets

## EUROPEAN SEARCH REPORT

Application Number

EP 19 15 1026

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/036059 A1 (TOKUNE TOSHIO [JP] ET AL) 4 February 2016 (2016-02-04) <br><br> * paragraphs [0114] - [0116], [0119], [0123]; figure 11 * <br> ----- | 1-3,5,6, 8-10,12, 14,15 | INV. <br> H01M4/13 <br> H01M4/139 <br> H01M4/62 <br> H01M10/052 <br> H01M4/134 |
| X | EP 3 361 537 A1 (SEKISUI CHEMICAL CO LTD [JP]) 15 August 2018 (2018-08-15) <br><br> * paragraph [0124]; example 1 * <br> ----- | 1-3,5, 7-9,11, 14,15 | H01M4/131 <br> H01M4/1391 <br> H01M4/1393 <br> H01M4/36 |
| X | ZHONGZHEN WU ET AL: "Depolarized and Fully Active Cathode Based on Li(Ni 0.5 Co 0.2 Mn 0.3 )O 2 Embedded in Carbon Nanotube Network for Advanced Batteries", NANO LETTERS, <br> vol. 14, no. 8, 7 July 2014 (2014-07-07), pages 4700-4706, XP055583798, <br> US <br> ISSN: 1530-6984, DOI: 10.1021/nl5018139 <br> * page 4701, left-hand column * | 1-3,5,6, 8-10,14, 15 | ADD. <br> H01M4/02 |
| X | & Zhongzhen Wu ET AL: "Supporting Information Depolarized and fully active cathode based on Li(Ni 0.5 Co 0.2 Mn 0.3 )O 2 embedded in CNT network for advanced batteries", <br> , <br> 30 June 2014 (2014-06-30), XP055583804, Retrieved from the Internet: URL:https://pubs.acs.org/doi/suppl/10.1021 /nl5018139/suppl_file/nl5018139_si_001.pdf [retrieved on 2019-04-26] <br> * page 2, lines 1-9 * <br> ----- <br><br> -/-- | 1-3,5,6, 8-10,14, 15 | **TECHNICAL FIELDS SEARCHED (IPC)** <br><br> H01M |

The present search report has been drawn up for all claims

| Place of search | Date of completion of the search | Examiner |
|---|---|---|
| Munich | 26 April 2019 | Meini, Stefano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 19 15 1026

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HASEGAWA KEI ET AL: "Lithium ion batteries made of electrodes with 99 wt% active materials and 1 wt% carbon nanotubes without binder or metal foils", JOURNAL OF POWER SOURCES, ELSEVIER SA, CH, vol. 321, 7 May 2016 (2016-05-07), pages 155-162, XP029541755, ISSN: 0378-7753, DOI: 10.1016/J.JPOWSOUR.2016.04.130 * paragraphs [2.1], [2.2] * | 1-3,5,6, 8-11,13 | |
| X | US 2016/028075 A1 (YU TIANYUE [US]) 28 January 2016 (2016-01-28) * paragraphs [0057], [0059] * | 1,3-5,8, 9 | |

TECHNICAL FIELDS
SEARCHED    (IPC)

The present search report has been drawn up for all claims

| Place of search | Date of completion of the search | Examiner |
|---|---|---|
| Munich | 26 April 2019 | Meini, Stefano |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

**EP 3 680 961 A1**

## ANNEX TO THE EUROPEAN SEARCH REPORT
## ON EUROPEAN PATENT APPLICATION NO.

EP 19 15 1026

26-04-2019

| Patent document cited in search report | | Publication date | Patent family member(s) | | Publication date |
|---|---|---|---|---|---|
| US 2016036059 | A1 | 04-02-2016 | JP | 2016031922 A | 07-03-2016 |
| | | | US | 2016036059 A1 | 04-02-2016 |
| EP 3361537 | A1 | 15-08-2018 | EP | 3361537 A1 | 15-08-2018 |
| | | | JP | WO2017061514 A1 | 02-08-2018 |
| | | | TW | 201729452 A | 16-08-2017 |
| | | | WO | 2017061514 A1 | 13-04-2017 |
| US 2016028075 | A1 | 28-01-2016 | US | 2016028075 A1 | 28-01-2016 |
| | | | US | 2017025676 A1 | 26-01-2017 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Li-ion battery materials: present and future. *Materials Today.*, 2015, vol. 18 (5), 252-264
- **HASEGAWA ; NODA.** *Journal of Power Sources,* 2016, vol. 321, 155-162
- **NANO.** *Lett.,* 2014, vol. 14, 4700-4706
- *Adv Energy Mater,* 2016, vol. 6, 1600918
- *Nano Lett,* 2015, vol. 15, 6222-6228
- *J Power Sources,* 2016, vol. 316, 1-7
- *Nano Lett,* 2015, vol. 15, 3907-3916
- *Energ Environ Sci,* 2016, vol. 9, 2025-2030
- *Sci Rep-Uk,* 2016, vol. 6
- *J Power Sources,* 2016, vol. 334, 78-85
- *Rsc Adv,* 2015, vol. 5, 16702-16706
- *Adv Funct Mater,* 2015, vol. 25, 6029-6040
- *J Power Sources,* 2011, vol. 196, 8714-8718
- *Nature Energy,* 2016, vol. 1, 16099
- *Adv Energy Mater,* 2011, vol. 1, 1012-1017
- *Adv Mater,* 2010, vol. 22, E139